# EUROPEAN PATENT APPLICATION

(11) **EP 4 825 640 A1**
(43) Date of publication of application: **21.10.2026**
(21) Application number: 24904408.2
(22) Date of filing: 12.12.2024
(51) Int. Cl.: B60L 53/122, H02J 50/40, H02J 50/90

(54) **WIRELESS POWER TRANSMISSION DEVICE AND WIRELESS POWER TRANSMISSION METHOD THEREOF**

(30) Priority: 13.12.2023 KR 20230180698; 22.11.2024 KR 20240168376; 22.11.2024 KR 20240168452; 22.11.2024 KR 20240168484
(71) Applicant: LG Innotek Co., Ltd., Seoul 07796 (KR)
(72) Inventor: KIM, Seo Jin, Seoul 07796 (KR); CHUNG, Eui Hoon, Anyang-si Gyeonggi-do 14069 (KR); CHOI, Hyeon Gyu, Incheon 14069 (KR)
(74) Representative: DREISS Patentanwälte PartG mbB
(86) International application number: PCT/KR2024/096850
(87) International publication number: WO 2025/127843

(57) **Abstract**

A wireless power transmission device according to an embodiment of the present invention comprises: a control unit; a power conversion unit that converts power received from a power supply device; and a transmission coil unit to which a current output from the power conversion unit is applied. The transmission coil unit includes a first transmission coil, a second transmission coil, and a third transmission coil. The power conversion unit includes: a power factor correction circuit unit that outputs a DC voltage from the power received from the power supply device; and an inverter unit that outputs, as an AC voltage, a DC voltage received from the power factor correction circuit unit. The inverter unit outputs a first AC voltage, a second AC voltage, and a third AC voltage, wherein at least two among the amplitude of the first AC voltage, the amplitude of the second AC voltage, and the amplitude of the third AC voltage are different from each other, and the duty ratio of the first AC voltage, the duty ratio of the second AC voltage, and the duty ratio of the third AC voltage are the same as each other.

## Description

### [Technical Field]

The present invention relates to a wireless power transmission device for an electric vehicle and a wireless power transmission method thereof.

### [Background Art]

A wireless charging system for an electric vehicle includes a power supply device, a ground assembly (GA), and a vehicle assembly (VA). In the case of a static wireless power transfer method, a GA is disposed on the ground surface of a parking lot, and an electric vehicle may be charged while parked through a VA. In the case of a dynamic wireless power transfer method, a GA is disposed on a road, and an electric vehicle may be charged while driving through a VA.

Power may be wirelessly transferred from a GA to a VA through magnetic induction or magnetic resonance between a transmission coil of the GA and a reception coil of the VA.

In order to shorten the charging time when an electric vehicle is wirelessly charged, a high-capacity wireless charging system is required. However, when power is transferred in a high-capacity manner in a wireless charging system that includes a single transmission coil and a single reception coil, high electromagnetic waves may be generated due to leakage flux.

Meanwhile, in a wireless charging system for an electric vehicle, the efficiency of wireless charging may vary according to the degree of alignment between a transmission coil of a GA and a reception coil of a VA. When wireless charging is initiated without alignment between the transmission coil of the GA and the reception coil of the VA, an overcurrent may occur in the transmission coil or the transmission coil may overheat.

### [Description of Invention]

### [Technical Problem]

A technical object to be achieved by the present invention is directed to providing a wireless power transmission device and a wireless power transmission method thereof in a wireless charging system for an electric vehicle.

Another technical object to be achieved by the present invention is directed to providing a wireless power transmission device and a wireless power transmission method thereof, in which leakage flux and electromagnetic wave generation are limited, in a wireless charging system for an electric vehicle.

Still another technical object to be achieved by the present invention is directed to providing a wireless power transmission device and a wireless power transmission method thereof, in which the power transfer efficiency between a transmission coil and a reception coil is improved, in a wireless charging system for an electric vehicle.

### [Technical Solution]

A wireless power transmission device according to an embodiment of the present invention includes a control unit, a power conversion unit configured to convert power received from a power supply device, and a transmission coil unit to which a current output from the power conversion unit is applied, wherein the transmission coil unit includes a first transmission coil, a second transmission coil, and a third transmission coil, the current output from the power conversion unit includes a first current applied to the first transmission coil, a second current applied to the second transmission coil, and a third current applied to the third transmission coil, at least two among an amplitude of the first current, an amplitude of the second current, and an amplitude of the third current are different from each other or at least two among a phase difference between the first current and the second current, a phase difference between the second current and the third current, and a phase difference between the third current and the first current are different from each other, and at least one of the amplitude and phase of the first current, at least one of the amplitude and phase of the second current, and at least one of the amplitude and phase of the third current are controlled by the control unit.

The control unit may control the power conversion unit on the basis of alignment information between the transmission coil unit and a reception coil unit included in a wireless power reception device.

The power conversion unit may include a power factor correction circuit unit that outputs a DC voltage from the power received from the power supply device, an inverter unit that outputs an AC voltage from the DC voltage received from the power factor correction circuit unit, and an impedance matching unit disposed between the inverter unit and the transmission coil unit, and the control unit may control at least one of the power factor correction circuit unit, the inverter unit, and the impedance matching unit on the basis of the alignment information.

The inverter unit may output a phase-shifted first voltage, a phase-shifted second voltage, and a phase-shifted third voltage, and at least one of the amplitude and phase of the first current, at least one of the amplitude and phase of the second current, and at least one of the amplitude and phase of the third current may be controlled by the first voltage, the second voltage, and the third voltage.

At least two among a duty ratio of the first voltage, a duty ratio of the second voltage, and a duty ratio of the third voltage may be different from each other.

The inverter unit may include a first full-bridge inverter that outputs the first voltage, a second full-bridge inverter that outputs the second voltage, and a third full-bridge inverter that outputs the third voltage.

A sensor unit that detects the alignment information between the transmission coil unit and the reception coil unit may be further included.

The sensor unit may include a plurality of position sensors disposed around the first transmission coil, the second transmission coil, and the third transmission coil.

A wireless power transmission method of a wireless power transmission device according to an embodiment of the present invention includes a power conversion operation of converting power received from a power supply device, and a current application operation of applying a current output in the power conversion operation to a first transmission coil, a second transmission coil, and a third transmission coil, wherein the current output in the power conversion operation includes a first current applied to the first transmission coil, a second current applied to the second transmission coil, and a third current applied to the third transmission coil, and in the power conversion operation, at least two among an amplitude of the first current, an amplitude of the second current, and an amplitude of the third current are controlled to be different from each other, or at least two among a phase difference between the first current and the second current, a phase difference between the second current and the third current, and a phase difference between the third current and the first current are controlled to be different from each other.

An operation of acquiring alignment information between the first transmission coil, the second transmission coil, and the third transmission coil and a first reception coil, a second reception coil, and a third reception coil include in a wireless power reception device may be further included, and at least one of the amplitude and phase of the first current, at least one of the amplitude and phase of the second current, and at least one of the amplitude and phase of the third current may be controlled based on the alignment information.

In the power conversion operation, a phase-shifted first voltage, a phase-shifted second voltage, and a phase-shifted third voltage may be generated from the power received from the power supply device, and at least one of the amplitude and phase of the first current, at least one of the amplitude and phase of the second current, and at least one of the amplitude and phase of the third current may be controlled by the first voltage, the second voltage, and the third voltage.

A wireless power transmission device according to another embodiment of the present invention includes a control unit, a power conversion unit that converts power received from a power supply device, and a transmission coil unit to which a current output from the power conversion unit is applied, wherein the transmission coil unit includes a first transmission coil, a second transmission coil, and a third transmission coil, the power conversion unit includes a power factor correction circuit unit that outputs a DC voltage from the power received from the power supply device, and an inverter unit that outputs an AC voltage from the DC voltage received from the power factor correction circuit unit, the inverter unit outputs a first AC voltage, a second AC voltage, and a third AC voltage, at least two among an amplitude of the first AC voltage, an amplitude of the second AC voltage, and an amplitude of the third AC voltage are different from each other, and a duty ratio of the first AC voltage, a duty ratio of the second AC voltage, and a duty ratio of the third AC voltage are identical to each other.

The power factor correction circuit unit may include a first power factor correction circuit, a second power factor correction circuit, and a third power factor correction circuit, the inverter unit may include a first inverter to which a first DC voltage output from the first power factor correction circuit is input, a second inverter to which a second DC voltage output from the second power factor correction circuit is input, and a third inverter to which a third DC voltage output from the third power factor correction circuit is input, the first AC voltage may be output from the first inverter, the second AC voltage may be output from the second inverter, and the third AC voltage may be output from the third inverter.

The first power factor correction circuit, the second power factor correction circuit, and the third power factor correction circuit may be controlled by the control unit on the basis of alignment information between the transmission coil unit and a reception coil unit included in a wireless power reception device.

An input of the first power factor correction circuit may be first phase power received from the power supply device, an input of the second power factor correction circuit may be second phase power received from the power supply device, an input of the third power factor correction circuit may be third phase power received from the power supply device, and at least one of the first power factor correction circuit, the second power factor correction circuit, and the third power factor correction circuit may be connected to a neutral point.

The current output from the power conversion unit includes a first current applied to the first transmission coil, the second current applied to the second transmission coil, and a third current applied to the third transmission coil, and at least one of an amplitude and phase of the first current, at least one of an amplitude and phase of the second current, and at least one of an amplitude and phase of the third current may be controlled by the first AC voltage, the second AC voltage, and the third AC voltage.

At least two among the amplitude of the first current, the amplitude of the second current, and the amplitude of the third current may be different from each other, or at least two among a phase difference between the first current and the second current, a phase difference between the second current and the third current, and a phase difference between the third current and the first current may be different from each other.

Each of the first inverter, the second inverter, and the third inverter may be a full-bridge inverter.

The power conversion unit may further include an impedance matching unit disposed between the inverter unit and the transmission coil unit.

A wireless power transmission device according to still another embodiment of the present invention includes a control unit, a power conversion unit that converts power received from a power supply device, and a transmission coil unit to which a current output from the power conversion unit is applied, wherein the transmission coil unit includes a first transmission coil, a second transmission coil, and a third transmission coil, the power conversion unit includes a power factor correction circuit unit that outputs a DC voltage from the power received from the power supply device, and an inverter unit that outputs an AC voltage from the DC voltage received from the power factor correction circuit unit, the power factor correction circuit unit includes a first power factor correction circuit that outputs a first DC voltage, a second power factor correction circuit that outputs a second DC voltage, and a third power factor correction circuit that outputs a third DC voltage, the inverter unit includes a first inverter that outputs a first AC voltage from the first DC voltage, a second inverter that outputs a second AC voltage from the second DC voltage, and a third inverter that outputs a third AC voltage from the third DC voltage, and the first power factor correction circuit, the second power factor correction circuit, and the third power factor correction circuit are controlled by the control unit on the basis of the alignment information between the transmission coil unit and a reception coil unit included in a wireless power reception device.

A wireless power transmission method of a wireless power transmission device according to another embodiment of the present invention includes a power conversion operation of converting power received from a power supply device, and a current application operation of applying a current output in the power conversion operation to a first transmission coil, a second transmission coil, and a third transmission coil, wherein the power conversion operation includes an operation of outputting a first DC voltage, a second DC voltage, and a third DC voltage from the power received from the power supply device, and an operation of outputting a first AC voltage, a second AC voltage, and a third AC voltage from the first DC voltage, the second DC voltage, and the third DC voltage, and in the power conversion operation, at least two among an amplitude of the first AC voltage, an amplitude of the second AC voltage, and an amplitude of the third AC voltage are controlled to be different from each other, and a duty ratio of the first AC voltage, a duty ratio of the second AC voltage, and a duty ratio of the third AC voltage are controlled to be identical to each other.

The first DC voltage, the second DC voltage, and the third DC voltage may be controlled based on alignment information between the first transmission coil, the second transmission coil, and the third transmission coil and a first reception coil, a second reception coil, and a third reception coil of the wireless power reception device.

A wireless power transmission method of a wireless power transmission device according to yet another embodiment of the present invention includes a position detection operation of acquiring alignment information between a transmission coil unit of the wireless power transmission device and a reception coil unit a wireless power reception device, and a power transfer operation of transferring power to the reception coil unit through the transmission coil unit on the basis of the alignment information acquired in the position detection operation, wherein the transmission coil unit includes a first transmission coil, a second transmission coil, and a third transmission coil, the reception coil unit includes a first reception coil, a second reception coil, and a third reception coil, and in the position detection operation, a current for position detection is applied to the first transmission coil, a current for position detection is applied to the second transmission coil, a current for position detection is applied to the third transmission coil, and the currents for position detection are applied sequentially to the first transmission coil, the second transmission coil, and the third transmission coil so as not to overlap each other.

In the power transfer operation, a first current may be applied to the first transmission coil, a second current may be applied to the second transmission coil, a third current may be applied to the third transmission coil, and the first current, the second current, and the third current may be simultaneously applied to the first transmission coil, the second transmission coil, and the third transmission coil.

An amplitude of the current for position detection may be smaller than an amplitude of the first current, an amplitude of the second current, and an amplitude of the third current.

In the position detection operation, the amplitudes of the currents for position detection applied to the first transmission coil, the second transmission coil, and the third transmission coil may be the same, and in the power transfer operation, at least two among the amplitude of the first current, the amplitude of the second current, and the amplitude of the third current may be different from each other.

At least two among a phase difference between the first current and the second current, a phase difference between the second current and the third current, and a phase difference between the third current and the first current may be different from each other.

At least one of the amplitude and phase of the first current, at least one of the amplitude and phase of the second current, and at least one of the amplitude and phase of the third current may be controlled based on the alignment information acquired in the position detection operation.

A standby operation may be further included between the position detection operation and the power transfer operation.

A wireless charging method of a wireless charging system according to yet another embodiment of the present invention includes a position detection operation of acquiring alignment information between a transmission coil unit of the wireless power transmission device and a reception coil unit A wireless power reception device, and a power transfer operation of transferring power to the reception coil unit through the transmission coil unit on the basis of the alignment information acquired in the position detection operation, wherein the transmission coil unit includes a first transmission coil, a second transmission coil, and a third transmission coil, the reception coil unit includes a first reception coil, a second reception coil, and a third reception coil, the position detection operation includes an operation of sequentially applying currents for position detection to the first transmission coil, the second transmission coil, and the third transmission coil so as not to overlap each other, and an operation of detecting voltages induced in the first reception coil, the second reception coil, and the third reception coil by the currents for position detection.

The position detection operation may further include an operation of calculating a mutual inductance between the transmission coil unit and the reception coil unit on the basis of the voltages induced in the first to third reception coils when the current for position detection is applied to the first transmission coil, the voltages induced in the first to third reception coils when the current for position detection is applied to the second transmission coil, and the voltages induced in the first to third reception coils when the current for position detection is applied to the third transmission coil, and an operation of detecting a relative position between the transmission coil unit and the reception coil unit on the basis of the mutual inductance.

The mutual inductance may be calculated in the form of a 3*3 matrix between the first to third transmission coil and the first to third reception coils.

In the power transfer operation, a first current may be applied to the first transmission coil, a second current may be applied to the second transmission coil, a third current may be applied to the third transmission coil, and the first current, the second current, and the third current may be simultaneously applied to the first transmission coil, the second transmission coil, and the third transmission coil.

An amplitude of the current for position detection may be smaller than an amplitude of the first current, an amplitude of the second current, and an amplitude of the third current.

### [Advantageous Effects]

According to an embodiment of the present invention, leakage flux and electromagnetic wave generation in a wireless charging system for an electric vehicle can be limited. Further, according to an embodiment of the present invention, the power transfer efficiency between a transmission coil and a reception coil in a wireless charging system for an electric vehicle can be improved. Further, according to an embodiment of the present invention, a relative position between a transmission coil and a reception coil in a wireless charging system for an electric vehicle can be efficiently detected. Further, according to an embodiment of the present invention, a high-power wireless charging system of 22 kW or more with limited leakage flux and high charging efficiency can be obtained. Further, according to an embodiment of the present invention, high power transfer efficiency between a transmission coil and a reception coil can be obtained without overheating on the transmission coil side, even in a state in which the transmission coil and the reception coil are not precisely aligned in a wireless charging system for an electric vehicle.

### [Description of Drawings]

FIG. 1 is a block diagram of an electric vehicle and a wireless charging system according to an embodiment of the present invention.
FIG. 2 is a block diagram of the wireless charging system according to an embodiment of the present invention.
FIG. 3 is a block diagram of a power supply device included in the wireless charging system according to an embodiment of the present invention.
FIG. 4 is a schematic view of the wireless charging system according to an embodiment of the present invention.
FIG. 5 is a more detailed schematic view of the wireless charging system according to an embodiment of the present invention.
FIG. 6 is a flowchart of a wireless power transmission method of a wireless power transmission device included in the wireless charging system according to an embodiment of the present invention.
FIG. 7 is a circuit diagram of a wireless charging system according to an embodiment of the present invention.
FIG. 8 shows waveforms of voltages output from an inverter unit according to the circuit diagram of FIG. 7.
FIG. 9 shows waveforms of currents applied to a transmission coil unit according to the circuit diagram of FIG. 7.
FIG. 10 is a circuit diagram of a wireless charging system according to another embodiment of the present invention.
FIG. 11 shows waveforms of voltages output from an inverter unit according to the circuit diagram of FIG. 10.
FIG. 12 shows waveforms of currents applied to a transmission coil unit according to the circuit diagram of FIG. 10.
FIG. 13 is a circuit diagram of a wireless charging system according to still another embodiment of the present invention.
FIG. 14 is a flowchart of a wireless power transmission method according to the circuit diagram of FIG. 13.
FIG. 15 shows waveforms of voltages output from an inverter unit according to the circuit diagram of FIG. 13.
FIG. 16 shows waveforms of currents applied to a transmission coil unit according to the circuit diagram of FIG. 13.
FIG. 17 shows the waveforms of the voltages output from the inverter unit according to the circuit diagram of FIG. 13 together with waveforms of inverter currents.
FIG. 18 is a flowchart of a wireless charging method of a wireless charging system according to an embodiment of the present invention.
FIG. 19 shows examples of acquiring alignment information between a transmission coil unit and a reception coil unit according to an embodiment of the present invention.
FIG. 20 is a flowchart of a wireless charging method of a wireless charging system according to another embodiment of the present invention.
FIG. 21 shows examples of acquiring alignment information between a transmission coil unit and a reception coil unit according to another embodiment of the present invention.
FIG. 22 shows an example of a state in which a transmission coil unit and a reception coil unit included in a wireless charging system according to an embodiment of the present invention are unaligned.
FIG. 23 is an embodied flowchart of the wireless charging method described with reference to FIGS. 20 and 21.
FIG. 24 shows currents applied to the transmission coil unit in each operation of FIG. 23.
FIG. 25 shows voltages induced in the reception coil unit in each operation of FIG. 23.
FIG. 26 shows waveforms of currents applied to a transmission coil unit in a position detection operation of a wireless charging method according to an embodiment of the present invention.
FIG. 27 shows waveforms of voltages induced in a reception coil unit when the currents of FIG. 26 are applied to the transmission coil unit in a state in which the transmission coil unit and the reception coil unit are aligned.
FIG. 28 shows waveforms of voltages induced in the reception coil unit when the currents of FIG. 26 are applied to the transmission coil unit in a state in which the transmission coil unit and the reception coil unit are unaligned.

### [Modes of the Invention]

Hereinafter, exemplary embodiments of the present invention will be described in detail with reference to the accompanying drawings.

However, it should be understood that the technical spirit of the present invention is not limited to embodiments to be disclosed below but may be implemented in many different forms. It should be understood that within the scope of the present invention, one or more elements of each of the embodiments may be selectively combined and substituted.

In addition, the terms (including technical and scientific terms) used in the embodiments of the present invention have the same meaning as commonly understood by one of ordinary skill in the art to which the present invention belongs. It should be further understood that terms, such as those defined in commonly used dictionaries, should be interpreted as having a meaning that is consistent with their meaning in the context of the related art.

Further, the terms used in the embodiments of the present invention are provided only to describe embodiments of the present invention and not for purposes of limitation.

In this specification, the singular forms include the plural forms unless the context clearly indicates otherwise, and the phrase "at least one element (or one or more elements) of an element A, an element B, and an element C," should be understood as including the meaning of at least one of all combinations being obtained by combining the element A, the element B, and the element C.

Further, in describing elements of the present invention, terminologies such as first, second, A, B, (a), and (b) may be used.

The term is used to distinguish an element from another element but a nature, an order, or a sequence of the elements is not limited by the terminology.

It will be understood that when an element is referred to as being "connected" or "coupled" to another element, it can be directly connected or coupled to another element, intervening elements may be present, or it can be connected or coupled to another element through the other element.

Further, when an element is described as being formed "on (above)" or "under (below)" another element, the term "on (above)" or "under (below)" includes both of a case in which two elements are in direct contact with each other or a case in which one or more elements are (indirectly) disposed between two elements. In addition, the term "on (above)" or "under (below)" includes a case in which another element is disposed in an upward direction or a downward direction with respect to one element.

Hereinafter, embodiments will be described in detail with reference to the accompanying drawings, the same or corresponding components are denoted by the same reference numerals regardless of reference numbers, and thus the description thereof will not be repeated.

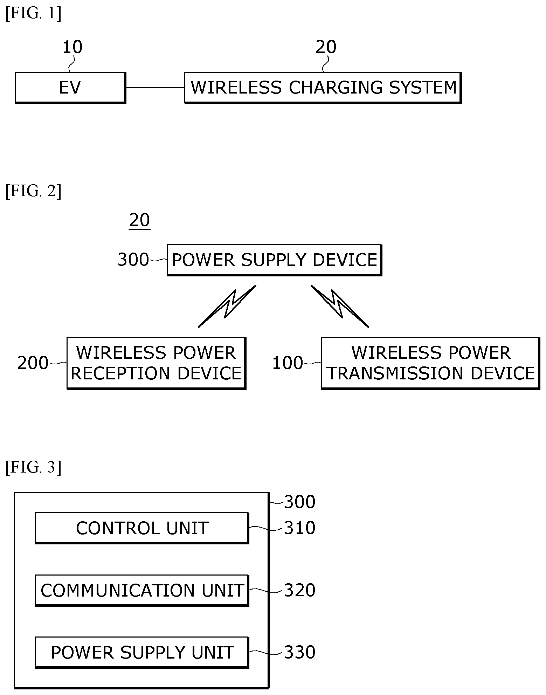

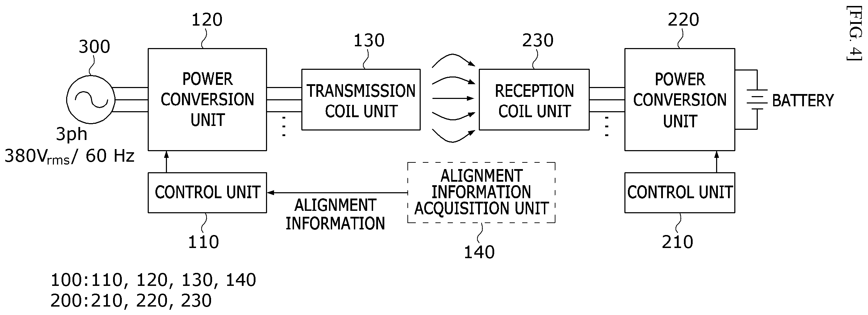

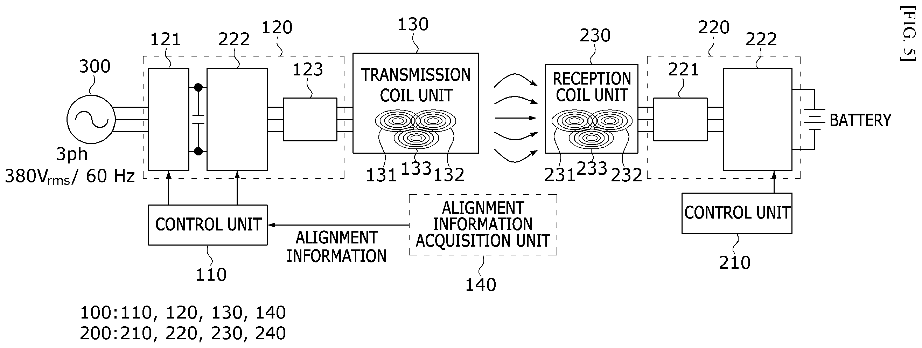

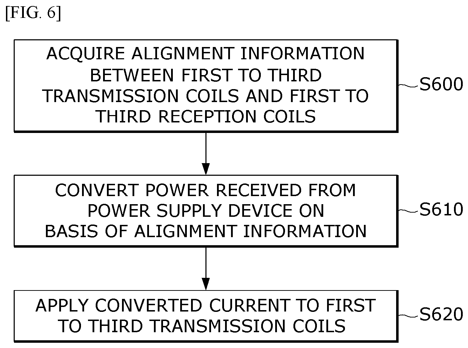

FIG. 1 is a block diagram of an electric vehicle (EV) and a wireless charging system according to an embodiment of the present invention, FIG. 2 is a block diagram of the wireless charging system according to an embodiment of the present invention, FIG. 3 is a block diagram of a power supply device included in the wireless charging system according to an embodiment of the present invention, FIG. 4 is a schematic view of the wireless charging system according to an embodiment of the present invention, FIG. 5 is a more detailed schematic view of the wireless charging system according to an embodiment of the present invention, and FIG. 6 is a flowchart of a wireless power transmission method of a wireless power transmission device included in the wireless charging system according to an embodiment of the present invention.

Referring to FIG. 1, an EV 10 may be charged by a wireless charging system 20. In this specification, the EV 10 refers to a vehicle propelled by an electric motor that draws a current from a rechargeable storage battery or other portable energy storage device.

According to an embodiment of the present invention, the EV 10 may be a vehicle that can be recharged using a wireless charging method without using a physical plug and socket.

Referring to FIGS. 2 to 5, the wireless charging system 20 includes a wireless power transmission device 100, a wireless power reception device 200, and a power supply device 300.

The wireless power transmission device 100 includes a control unit 110, a power conversion unit 120, and a transmission coil unit 130, and the wireless power reception device 200 includes a control unit 210, a power conversion unit 220, and a reception coil unit 230.

The transmission coil unit 130 of the wireless power transmission device 100 may be disposed on the ground surface of a parking lot or on a road or at least a portion thereof may be embedded in the ground surface of the parking lot or in the road, and the reception coil unit 230 of the wireless power reception device 200 may be mounted on the EV 10. The reception coil unit 230 may be mounted on a lower portion of the EV 10 and aligned to face the transmission coil unit 130 embedded in the ground surface of the parking lot or in the road, and a current applied to the transmission coil unit 130 may enable an induced voltage to be generated in the reception coil unit 230. Accordingly, at least some components of the transmission coil unit 130 or the wireless power transmission device 100 including the transmission coil unit 130 may be referred to as a ground assembly (GA). At least some components of the reception coil unit 230 or the wireless power reception device 200 including the reception coil unit 230 may be referred to as a vehicle assembly (VA).

In the case of a static wireless power transfer method, the transmission coil unit 130 may be disposed on the ground surface of a parking lot, and the transmission coil unit 130 may be aligned with the reception coil unit 230 mounted on the EV 10 while parked.

The power supply device 300 controls the wireless power transmission device 100 and/or the wireless power reception device 200 and supplies power to the wireless power transmission device 100. To this end, the power supply device 300 may communicate with the wireless power transmission device 100 and/or the wireless power reception device 200 and transmit a control signal to each of the wireless power transmission device 100 and the wireless power reception device 200. The power supply device 300 may be EV supply equipment (EVSE) or a portion of the EVSE or may be used as a grid, a power source, a system, etc.

The power supply device 300 includes a control unit 310, a communication unit 320, and a power supply unit 330. The control unit 310 may control at least one of the control unit 110, the power conversion unit 120, and the transmission coil unit 130 of the wireless power transmission device 100. Alternatively, at least some components of the control unit 310 of the power supply device 300 and the control unit 110 of the wireless power transmission device 100 may be integrated. The communication unit 320 communicates with the EV 10 or an EV communication controller (EVCC) mounted on the EV 10 and also communicates with the wireless power transmission device 100. The power supply unit 330 supplies power to the wireless power reception device 200 mounted on the EV 10 through the wireless power transmission device 100. The control unit 310 and communication unit 320 of the power supply device 300 may be a supply equipment communication controller (SECC). Alternatively, portions of the control unit 310 and communication unit 320 of the power supply device 300 and the control unit 110 of the wireless power transmission device 100 may be an SECC. The power supply device 300 may be referred to as a wireless charging device or an EVSE, and the control unit 310 and communication unit 320 of the power supply device 300 may be referred to as a wireless charging control device.

Although not shown, each of the wireless power transmission device 100 and the wireless power reception device 200 may further include a communication unit.

When the reception coil unit 230 is aligned on the transmission coil unit 130, signal exchange for setting a connection between the communication unit of the wireless power transmission device 100 and the communication unit of the wireless power reception device 200 may be performed. For example, the communication unit of the wireless power transmission device 100 may periodically transmit a ping signal, and a connection setting between the communication unit of the wireless power reception device 200 that receives the ping signal and the communication unit of the wireless power transmission device 100 may be performed through signal exchange.

The communication unit of the wireless power transmission device 100 and the communication unit of the wireless power reception device 200 may communicate with the power supply device 300. For example, the communication unit of the wireless power transmission device 100 may transmit information on a connection with the wireless power reception device 200 to the power supply device 300, and the power supply device 300 may transmit a control signal for wireless power transfer to the communication unit of the wireless power transmission device 100. The communication unit of the wireless power transmission device 100 may operate the control unit 110 on the basis of the control signal received from the power supply device 300, and the transmission coil unit 130 may be controlled according to the operation of the control unit 110. The communication unit of the wireless power transmission device 100 may be integrated with the control unit 110 of the wireless power transmission device 100 or with the communication unit 320 of the power supply device 300.

Further, the communication unit of the wireless power reception device 200 may transmit vehicle information to the power supply device 300, and the power supply device 300 may transmit a control signal for wireless power reception to the communication unit of the wireless power reception device 200. The communication unit of the wireless power reception device 110 may operate the control unit 210 on the basis of the control signal received from the power supply device 300, and the reception coil unit 230 may be controlled according to the operation of the control unit 210. At least some components of the communication unit and control unit 210 of the wireless power reception device 200 may be some components of the EVCC mounted on the EV 10.

In wireless charging technology for EVs, there is a need for high-power wireless charging systems to reduce charging time, and there are attempts to address the impact on the human body caused by electromagnetic waves generated in the surroundings during high-power transfer. When a GA and a VA each have a single transmission coil and a single reception coil, leakage flux may be significantly increased during high-power transfer.

According to an embodiment of the present invention, in order to limit leakage flux during high-power transfer, the GA and the VA each include a three-phase transmission coil and a three-phase reception coil. That is, the transmission coil unit 130 of the wireless power transmission device 100 according to the embodiment of the present invention includes a first transmission coil 131, a second transmission coil 132, and a third transmission coil 133, and the reception coil unit 230 of the wireless power reception device 200 includes a first reception coil 231, a second reception coil 232, and a third reception coil 233. Therefore, there is magnetic asymmetry between the transmission coil unit 130 and the reception coil unit 230, and the wireless charging efficiency may vary according to a relative position between the transmission coil unit 130 and the reception coil unit 230. When the first transmission coil 131, the second transmission coil 132, and the third transmission coil 133 of the transmission coil unit 130 and the first reception coil 231, the second reception coil 232, and the third reception coil 233 of the reception coil unit 230 are precisely aligned, high wireless charging efficiency is achieved, but when the first transmission coil 131, the second transmission coil 132, and the third transmission coil 133 of the transmission coil unit 130 and the first reception coil 231, the second reception coil 232, and the third reception coil 233 of the reception coil unit 230 are not precisely aligned, an overcurrent may flow on the side of the transmission coil unit 130 or the side of the transmission coil unit 130 may overheat and, accordingly, the wireless charging efficiency may be lowered. In order to precisely align the first transmission coil 131, the second transmission coil 132, and the third transmission coil 133 of the transmission coil unit 130 and the first reception coil 231, the second reception coil 232, and the third reception coil 233 of the reception coil unit 230, the transmission coil unit 130 side or the reception coil unit 230 side should move, but precise movement may be difficult.

According to an embodiment of the present invention, a current applied to the transmission coil unit 130 is controlled according to alignment information between the transmission coil unit 130 and the reception coil unit 230 and, accordingly, a voltage induced in the reception coil unit 230 is desired to be maximized even when the transmission coil unit 130 and the reception coil unit 230 are not precisely aligned.

More specifically, referring to FIGS. 4 to 6, the wireless power transmission device 100 includes the control unit 110, the power conversion unit 120, and the transmission coil unit 130, and the wireless power reception device 200 includes the control unit 210, the power conversion unit 220, and the reception coil unit 230. As described above, the transmission coil unit 130 includes the first transmission coil 131, the second transmission coil 132, and the third transmission coil 133. The reception coil unit 230 includes the first reception coil 231, the second reception coil 232, and the third reception coil 233. The control unit 110 controls the wireless power transmission device 100, and the control unit 210 controls the wireless power reception device 200.

The wireless power transmission device 100 receives power from the power supply device 300. The power supply device 300 supplies power in three phases. The power conversion unit 120 of the wireless power transmission device 100 converts the power received from the power supply device 300, and a current output from the power conversion unit 120 is applied to the transmission coil unit 130. The control unit 110 may control the current applied to the transmission coil unit 130 through the power conversion unit 120. The current applied to the transmission coil unit 130 enables an induced voltage to be generated in the reception coil unit 230 of the wireless power reception device 200, and the power conversion unit 220 converts an induced voltage received from the reception coil unit 230 and transfers the converted voltage to a battery. The control unit 210 may control the power conversion unit 220 to satisfy the output specifications of the battery.

More specifically, the power conversion unit 120 of the wireless power transmission device 100 includes a power factor correction (PFC) circuit unit 121, an inverter unit 122, and an impedance matching unit 123. The PFC circuit unit 121 performs AC/DC conversion and outputs a DC voltage from the power received from the power supply device 300. Here, the DC voltage may be referred to as a DC link voltage. The inverter unit 122 performs DC/AC conversion and outputs an AC voltage from the DC voltage received from the PFC circuit unit 121. The inverter unit 122 may be referred to as a high frequency (HF) inverter unit. The impedance matching unit 123 is disposed to connect the inverter unit 122 and the transmission coil unit 130 to perform impedance matching. The impedance matching unit 123 includes a variable passive element or a fixed passive element and may be referred to as an impedance matching network (IMN).

The power conversion unit 220 of the wireless power reception device 200 includes an impedance matching unit 221 and a rectifier 222. The impedance matching unit 221 is disposed between the reception coil unit 230 and the rectifier 222 to perform impedance matching. The impedance matching unit 221 includes a variable passive element or a fixed passive element and may be referred to as an IMN. The rectifier 222 converts an AC voltage or an AC current into a DC voltage or a DC current to charge a battery.

According to an embodiment of the present invention, the wireless power transmission device 100 converts the power received from the power supply device 300 on the basis of the alignment information between the transmission coil unit 130 and the reception coil unit 230 and applies a current to the transmission coil unit 130.

That is, the wireless power transmission device 100 acquires alignment information between the first transmission coil 131, the second transmission coil 132, and the third transmission coil 133 which are included in the transmission coil unit 130 and the first reception coil 231, the second reception coil 232, and the third reception coil 233 which are included in the reception coil unit 230 of the wireless power reception device 200 (S600). To this end, the wireless power transmission device 100 may further include an alignment information acquisition unit 140. Here, the alignment information may be information on relative positions between the first transmission coil 131, the second transmission coil 132, and the third transmission coil 133 and the first reception coil 231, the second reception coil 232, and the third reception coil 233. For example, the alignment information between the first transmission coil 131, the second transmission coil 132, and the third transmission coil 133 and the first reception coil 231, the second reception coil 232, and the third reception coil 233 may vary according to a distance R and an angle θ. Here, R may denote a distance between the center of the transmission coil unit and the center of the reception coil unit, and θ may denote an angle of misalignment between the center of the transmission coil unit and the center of the reception coil unit. Here, the distance between the center of the transmission coil unit 130 and the center of the reception coil unit 230 may be a distance between the center of the transmission coil unit 130 and the center of the reception coil unit 230 in a planar direction. Here, the distance in the planar direction may be a distance in the planar direction in which the transmission coil unit 130 is disposed or a distance in the planar direction in which the reception coil unit 230 is disposed. That is, when the center of the transmission coil unit 130 and the center of the reception coil unit 230 overlap in a vertical direction, the distance between the center of the transmission coil unit 130 and the center of the reception coil unit 230 may be expressed as 0. Here, the vertical direction is a direction perpendicular to the planar direction and may be a direction from the transmission coil unit 130 toward the reception coil unit 230. In addition, the angle θ may be an angle formed by the transmission coil unit 130 and the reception coil unit 230 in the planar direction. A specific method for the wireless power transmission device 100 to acquire alignment information will be described below.

Next, the power conversion unit 120 of the wireless power transmission device 100 converts the power received from the power supply device 300 on the basis of the alignment information acquired in operation S600 (S610) and applies a current output from the power conversion unit 120 to the transmission coil unit 113, that is, the first transmission coil 131, the second transmission coil 132, and the third transmission coil 133 (S620). To this end, the control unit 110 controls the power conversion unit 120 on the basis of the alignment information acquired in operation S600, and the power conversion unit 120 outputs a current to be applied to the transmission coil unit 130 under the control of the control unit 110.

The current output by the power conversion unit 120 includes a first current Iₐ applied to the first transmission coil 131, a second current I_{b} applied to the second transmission coil 132, and a third current I_{c} applied to the third transmission coil 133. The first current Iₐ, the second current I_{b}, and the third current I_{c} are AC currents having their respective amplitudes and phases.

According to an embodiment of the present invention, at least one of an amplitude and phase of the first current Iₐ, at least one of an amplitude and phase of the second current I_{b}, and at least one of an amplitude and phase of the third current I_{c} are controlled by the control unit 110 on the basis of the alignment information between the transmission coil unit 130 and the reception coil unit 230. In this case, at least two among the amplitude of the first current Iₐ, the amplitude of the second current I_{b}, and the amplitude of the third current I_{c} may be different from each other, or at least two among a phase difference between the first current Iₐ and the second current I_{b}, a phase difference between the second current I_{b} and the third current I_{c}, and a phase difference between the third current I_{c} and the first current Iₐ may be different from each other. In this specification, when at least two among the amplitude of the first current Iₐ, the amplitude of the second current I_{b}, and the amplitude of the third current I_{c} are different from each other or when at least two among the phase difference between the first current Iₐ and the second current I_{b}, the phase difference between the second current I_{b} and the third current I_{c}, and the phase difference between the third current I_{c} and the first current Iₐ are different from each other, the first current Iₐ, the second current I_{b}, and the third current I_{c} may be expressed to be asymmetric. For example, the amplitude of the first current Iₐ, the amplitude of the second current I_{b}, and the amplitude of the third current I_{c} may all be different from each other, or one of the amplitude of the first current Iₐ, the amplitude of the second current I_{b}, and the amplitude of the third current I_{c} may be different from the other two. For example, the phase difference between the first current Iₐ and the second current I_{b}, the phase difference between the second current I_{b} and the third current I_{c}, and the phase difference between the third current I_{c} and the first current Iₐ may all be different from each other, or one of the phase difference between the first current Iₐ and the second current I_{b}, the phase difference between the second current I_{b} and the third current I_{c}, and the phase difference between the third current I_{c} and the first current Iₐ may be different from the other two. For example, at least one of the phase difference between the first current Iₐ and the second current I_{b}, the phase difference between the second current I_{b} and the third current I_{c}, and the phase difference between the third current I_{c} and the first current Iₐ may not be 120°.

In this way, according to an embodiment of the present invention, the first to third currents Iₐ, I_{b}, and I_{c} applied to the first to third transmission coils 131, 132, and 133 of the transmission coil unit 130 are controlled based on the alignment information between the transmission coil unit 130 and the reception coil unit 230. For example, when the transmission coil unit 130 and the reception coil unit 230 are in a precisely aligned state, the first to third currents Iₐ, I_{b}, and I_{c} applied to the first to third transmission coils 131, 132, and 133 of the transmission coil unit 130 may be symmetrical with each other. That is, when the transmission coil unit 130 and the reception coil unit 230 are in a precisely aligned state, the first to third currents Iₐ, I_{b}, and I_{c} applied to the first to third transmission coils 131, 132, and 133 of the transmission coil unit 130 may all have the same amplitude and a phase difference of 120°. In contrast, the transmission coil unit 130 and the reception coil unit 230 are not in a precisely aligned state, intentional asymmetry is imparted to the first to third currents Iₐ, I_{b}, and I_{c} applied to the first to third transmission coils 131, 132, and 133 of the transmission coil unit 130. According to an embodiment of the present invention, asymmetry may be imparted to the first to third currents Iₐ, I_{b}, and I_{c} so that the loss between the transmission coil unit 130 and the reception coil unit 230 is minimized. For example, the first to third currents Iₐ, I_{b}, and I_{c} may be controlled to values for minimizing the following loss indicator.$Lossratio = \frac{{I}_{a , opt}^{2} + {I}_{b , opt}^{2} + {I}_{c , opt}^{2}}{{I}_{a , bal}^{2} + {I}_{b , bal}^{2} + {I}_{c , bal}^{2}}$

Here, I_{a,bal}, I_{b,bal}, and I_{c,bal} denote currents applied to the transmission coil unit 130 in an ideal alignment state, and I_{a,opt}, I_{b,opt}, and I_{c,opt} denote currents applied to the transmission coil unit 130 controlled by the control unit 110 according to alignment information.

Therefore, even when wireless charging proceeds in a state in which the transmission coil unit 130 and the reception coil unit 230 are not precisely aligned, the power transfer efficiency between the transmission coil unit 130 and the reception coil unit 230 may be maximized.

According to an embodiment of the present invention, in order to impart intentional asymmetry to the first to third currents Iₐ, I_{b}, and I_{c}, the control unit 110 may control the PFC circuit unit 121, control the inverter unit 122, or control the impedance matching unit 123.

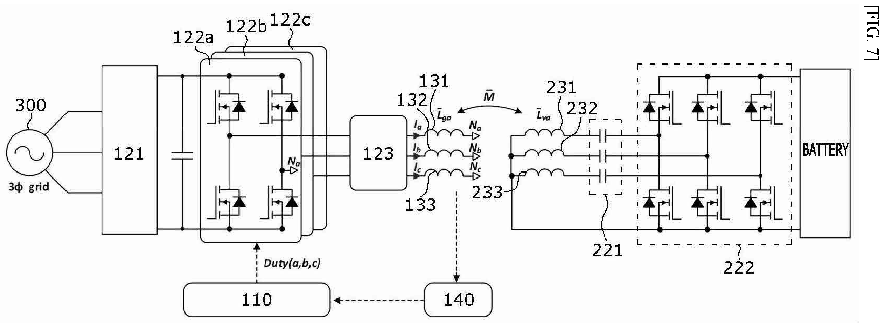

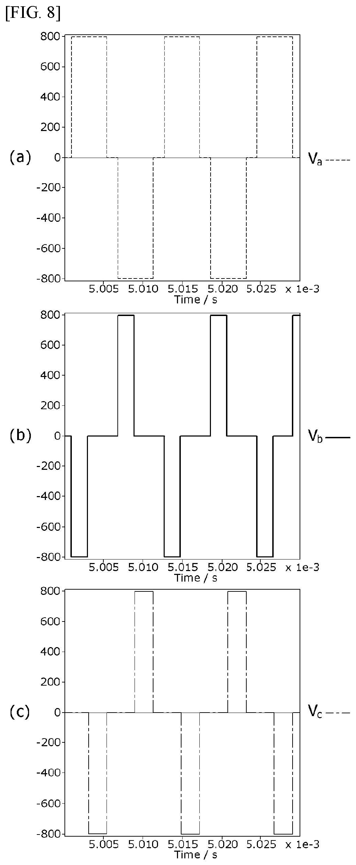

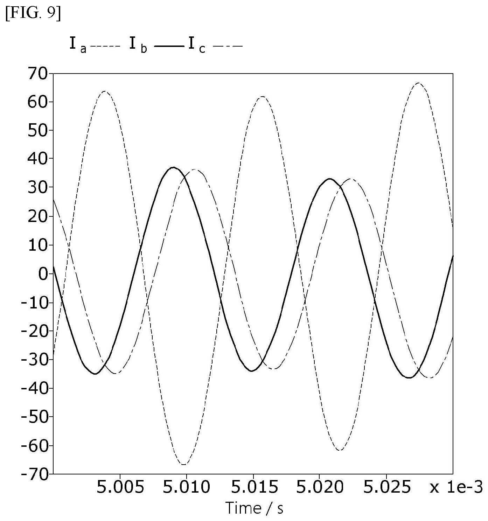

FIG. 7 is a circuit diagram of a wireless charging system according to an embodiment of the present invention, FIG. 8 shows waveforms of voltages output from an inverter unit according to the circuit diagram of FIG. 7, and FIG. 9 shows waveforms of currents applied to a transmission coil unit according to the circuit diagram of FIG. 7.

Referring to FIG. 7, a wireless power transmission device 100 includes a control unit 110, a power conversion unit 120, and a transmission coil unit 130, and the power conversion unit 120 includes a PFC circuit unit 121, an inverter unit 122, and an impedance matching unit 123. The description of the same content as those described with reference to FIGS. 1 to 6 will not be repeated.

According to an embodiment of the present invention, the inverter unit 122 includes a first inverter 122a, a second inverter 122b, and a third inverter 122c, and the control unit 110 controls the first inverter 122a, the second inverter 122b, and the third inverter 122c in order to impart intentional asymmetry to first to third currents Iₐ, I_{b}, and I_{c}. As shown, each of the first inverter 122a, the second inverter 122b, and the third inverter 122c includes a full-bridge inverter, but the present invention is not limited thereto, and the inverter unit 122 may include a half-bridge inverter.

The first inverter 122a, the second inverter 122b, and the third inverter 122c are connected to a single PFC circuit unit 121. The PFC circuit unit 121 is a single three-phase PFC circuit and outputs a common DC voltage. The first inverter 122a, the second inverter 122b, and the third inverter 122c, which receive the common DC voltage output from the PFC circuit unit 121, may output a first AC voltage Vₐ, a second AC voltage V_{b}, and a third AC voltage V_{c}. The first AC voltage Vₐ, the second AC voltage V_{b}, and the third AC voltage V_{c}, which are output by the first inverter 122a, the second inverter 122b, and the third inverter 122c, have waveforms controlled by the control unit 110 in order to impart intentional asymmetry to the first to third currents Iₐ, I_{b}, and I_{c} on the basis of alignment information between the transmission coil unit 130 and the reception coil unit 230. Since the common DC voltage is input to the first inverter 122a, the second inverter 122b, and the third inverter 122c, amplitudes of the first AC voltage Vₐ, the second AC voltage V_{b}, and the third AC voltage V_{c} are the same, but duty ratios thereof may be different through phase shift control. As shown in FIG. 8, the duty ratios of the first AC voltage Vₐ, the second AC voltage V_{b}, and the third AC voltage V_{c} may all be different, or the duty ratio of one of the first AC voltage Vₐ, the second AC voltage V_{b}, and the third AC voltage V_{c} may be different from the duty ratios of the other two. In this way, when intentional asymmetry is imparted to the first AC voltage Vₐ, the second AC voltage V_{b}, and the third AC voltage V_{c} output from the inverter unit 122, the first to third currents Iₐ, I_{b}, and I_{c} applied to the transmission coil unit 130 may also be generated asymmetrically. That is, as shown in FIG. 9, at least two among an amplitude of the first current Iₐ, an amplitude of the second current I_{b}, and an amplitude of the third current I_{c} may be different from each other, or at least two among a phase difference between the first current Iₐ and the second current I_{b}, a phase difference between the second current I_{b} and the third current I_{c}, and a phase difference between the third current I_{c} and the first current Iₐ may be different from each other. For example, the amplitude of the first current Iₐ, the amplitude of the second current I_{b}, and the amplitude of the third current I_{c} may all be different from each other, or one of the amplitude of the first current Iₐ, the amplitude of the second current I_{b}, and the amplitude of the third current I_{c} may be different from the other two. For example, the phase difference between the first current Iₐ and the second current I_{b}, the phase difference between the second current I_{b} and the third current I_{c}, and the phase difference between the third current I_{c} and the first current Iₐ may all be different from each other, or one of the phase difference between the first current Iₐ and the second current I_{b}, the phase difference between the second current I_{b} and the third current I_{c}, and the phase difference between the third current I_{c} and the first current Iₐ may be different from the other two.

In this way, when a current having an optimized amplitude and phase is applied to each of first to third transmission coil units 131, 132, and 133 of the transmission coil unit 130 on the basis of the alignment information between the transmission coil unit 130 and the reception coil unit 230, even when wireless charging proceeds in a state in which the transmission coil unit 130 and the reception coil unit 230 are not precisely aligned, the loss between the transmission coil unit 130 and the reception coil unit 230 may be minimized so that the power transfer efficiency may be maximized.

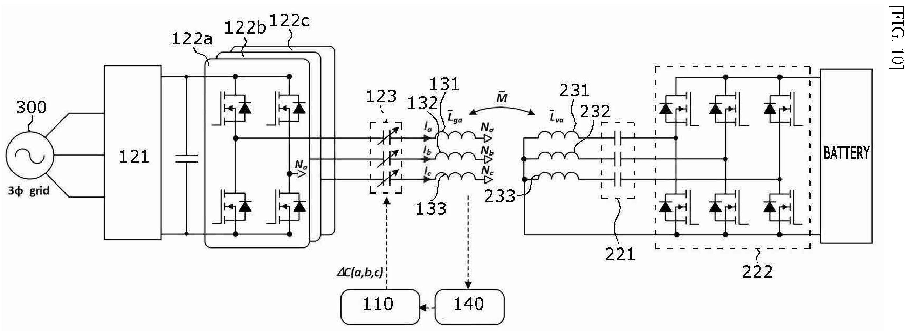

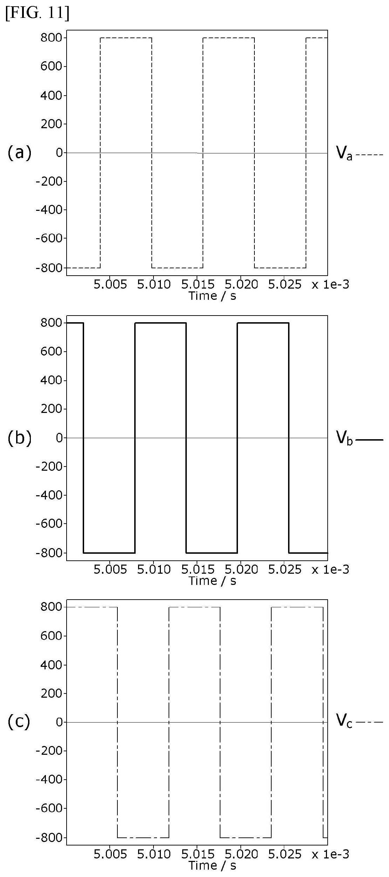

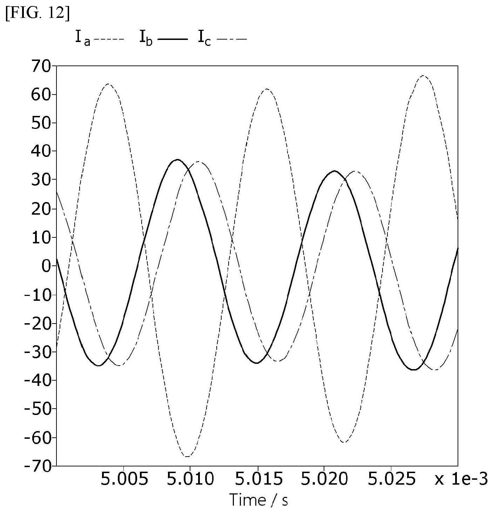

FIG. 10 is a circuit diagram of a wireless charging system according to another embodiment of the present invention, FIG. 11 shows waveforms of voltages output from an inverter unit according to the circuit diagram of FIG. 10, and FIG. 12 shows waveforms of currents applied to a transmission coil unit according to the circuit diagram of FIG. 10.

Referring to FIG. 10, a wireless power transmission device 100 includes a control unit 110, a power conversion unit 120, and a transmission coil unit 130, and the power conversion unit 120 includes a PFC circuit unit 121, an inverter unit 122, and an impedance matching unit 123. The description of the same content as those described with reference to FIGS. 1 to 6 will not be repeated.

According to an embodiment of the present invention, the inverter unit 122 includes a first inverter 122a, a second inverter 122b, and a third inverter 122c, and the control unit 110 controls the impedance matching unit 123 in order to impart intentional asymmetry to first to third currents Iₐ, I_{b}, and I_{c}. As shown, each of the first inverter 122a, the second inverter 122b, and the third inverter 122c includes a full-bridge inverter, not limited thereto, and may include a half-bridge inverter.

The first inverter 122a, the second inverter 122b, and the third inverter 122c are connected to a single PFC circuit unit 121. The PFC circuit unit 121 is a single three-phase PFC circuit and outputs a common DC voltage. The first inverter 122a, the second inverter 122b, and the third inverter 122c may output a first AC voltage Vₐ, a second AC voltage V_{b}, and a third AC voltage V_{c}. As shown in FIG. 11, the first AC voltage Vₐ, the second AC voltage V_{b}, and the third AC voltage V_{c}, which are output by the first inverter 122a, the second inverter 122b, and the third inverter 122c, all have the same amplitude and are output to have waveforms with a phase difference of 120 degrees. Unlike the embodiment shown in FIGS. 7 to 9, duty ratios of the first AC voltage Vₐ, second AC voltage V_{b}, and third AC voltage V_{c} are all the same. However, according to the embodiment shown in FIGS. 10 to 12, the first to third currents Iₐ, I_{b}, and I_{c} applied to the transmission coil unit 130 may be generated asymmetrically due to a variable capacitor included in the impedance matching unit 123. That is, as shown in FIG. 12, at least two among an amplitude of the first current Iₐ, an amplitude of the second current I_{b}, and an amplitude of the third current I_{c} may be different from each other, or at least two among a phase difference between the first current Iₐ and the second current I_{b}, a phase difference between the second current I_{b} and the third current I_{c}, and a phase difference between the third current I_{c} and the first current Iₐ may be different from each other. For example, the amplitude of the first current Iₐ, the amplitude of the second current I_{b}, and the amplitude of the third current I_{c} may all be different from each other, or one of the amplitude of the first current Iₐ, the amplitude of the second current I_{b}, and the amplitude of the third current I_{c} may be different from the other two. For example, the phase difference between the first current Iₐ and the second current I_{b}, the phase difference between the second current I_{b} and the third current I_{c}, and the phase difference between the third current I_{c} and the first current Iₐ may all be different from each other, or one of the phase difference between the first current Iₐ and the second current I_{b}, the phase difference between the second current I_{b} and the third current I_{c}, and the phase difference between the third current I_{c} and the first current Iₐ may be different from the other two.

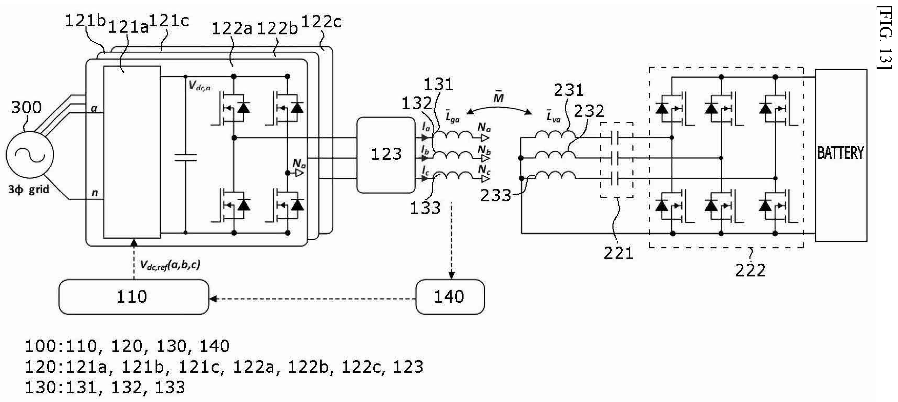

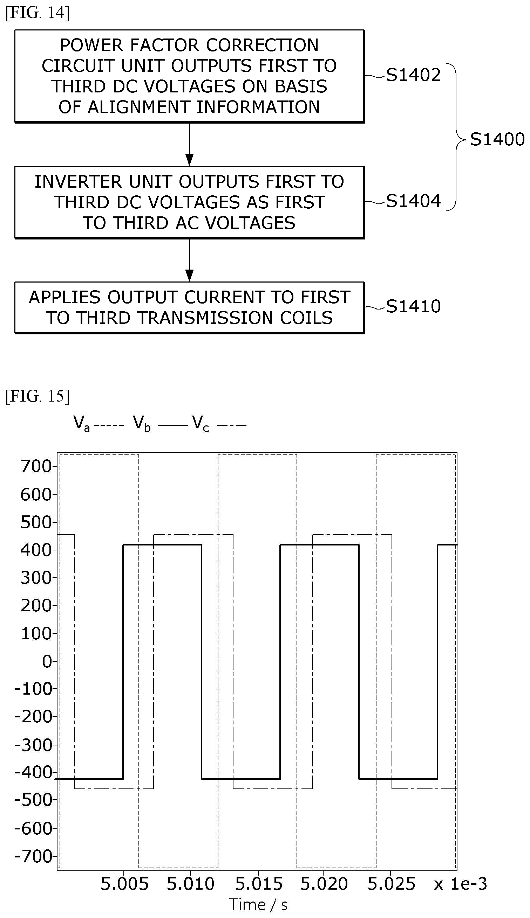

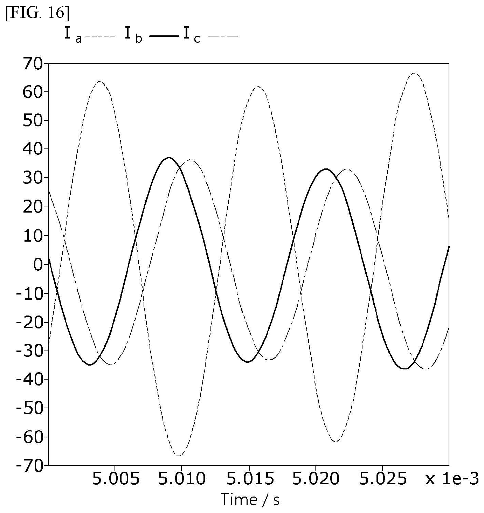

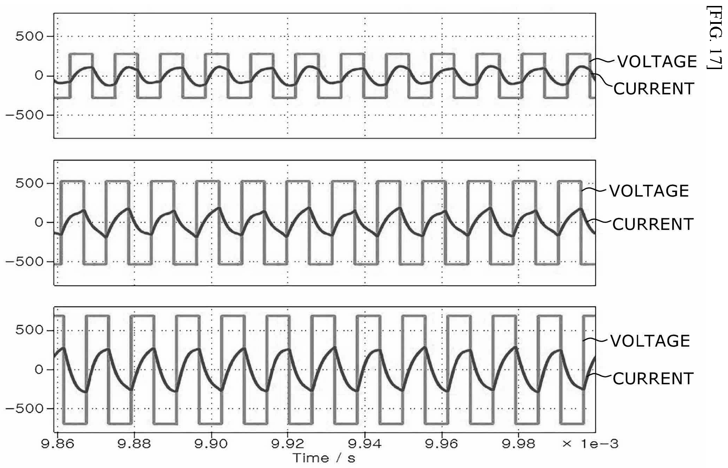

FIG. 13 is a circuit diagram of a wireless charging system according to still another embodiment of the present invention, FIG. 14 is a flowchart of a wireless power transmission method according to the circuit diagram of FIG. 13, FIG. 15 shows waveforms of voltages output from an inverter unit according to the circuit diagram of FIG. 13, FIG. 16 shows waveforms of currents applied to a transmission coil unit according to the circuit diagram of FIG. 13, and FIG. 17 shows the waveforms of the voltages output from the inverter unit according to the circuit diagram of FIG. 13 together with waveforms of inverter currents.

Referring to FIGS. 13 and 14, a wireless power transmission device 100 includes a control unit 110, a power conversion unit 120, and a transmission coil unit 130, and the power conversion unit 120 includes a PFC circuit unit 121, an inverter unit 122, and an impedance matching unit 123. The description of the same content as those described with reference to FIGS. 1 to 6 will not be repeated.

More specifically, referring to FIGS. 13 and 14, the power conversion unit 120 of the wireless power transmission device 100 converts power received from a power supply device 300 (S1400) and applies a current output in operation S1400 to a first transmission coil 131, a second transmission coil 132, and a third transmission coil 133 (S1410).

In operation S1400, the PFC circuit unit 121 outputs the power received from the power supply device 300 with a first DC voltage, a second DC voltage, and a third DC voltage (S1402), and the inverter unit 122 outputs a first AC voltage, a second AC voltage, and a third AC voltage from the first DC voltage, the second DC voltage, and the third DC voltage, which are output by the PFC circuit unit 121 (S1404).

To this end, the PFC circuit unit 121 includes a first PFC circuit 121a, a second PFC circuit 121b, and a third PFC circuit 121c, the inverter unit 122 includes a first inverter 122a, a second inverter 122b, and a third inverter 122c, the control unit 110 controls the first PFC circuit 121a, the second PFC circuit 121b, and the third PFC circuit 121c on the basis of alignment information between the transmission coil unit 130 and the reception coil unit 230 and, accordingly, first to third currents Iₐ, I_{b}, and I_{c} applied to the first to third transmission coils 131, 132, and 133 may be asymmetrically controlled to have an optimal combination in which the loss index is minimized.

Therefore, the first PFC circuit 121a, the second PFC circuit 121b, and the third PFC circuit 121c may output independent DC voltages so that the first to third currents Iₐ, I_{b}, and I_{c} applied to the first to third transmission coils 131, 132, and 133 have a minimum loss index, on the basis of the alignment information between the transmission coil unit 130 and the reception coil unit 230. That is, the first PFC circuit 121a outputs the first DC voltage, and the first inverter 122a that receives the first DC voltage may output a first AC voltage Vₐ. The second PFC circuit 121b outputs the second DC voltage, and second inverter 122b that receives the second DC voltage may output a second AC voltage V_{b}. The third PFC circuit 121c outputs the third DC voltage, and the third inverter 122c that receives the third DC voltage may output a third AC voltage V_{c}. Here, at least two among the first DC voltage, the second DC voltage, and the third DC voltage may be different from each other. Here, each of the first PFC circuit 121a, the second PFC circuit 121b, and the third PFC circuit 121c is a single-phase PFC circuit and receives each phase of the three-phase power supply and a neutral point n as inputs. Here, the first PFC circuit 121a, the second PFC circuit 121b, and the third PFC circuit 121c is a single-phase PFC circuit and receives each phase of the three-phase power supply and a neutral point n as inputs. That is, an input of the first PFC circuit 121a may be first phase power received from the power supply device 300, an input of the second PFC circuit 121b may be second phase power received from the power supply device 300, an input of the third PFC circuit 121c may be third phase power received from the power supply device 300, and at least one of the first PFC circuit 121a, the second PFC circuit 121b, and the third PFC circuit 121c may be connected to the neutral point n. Accordingly, the first to third DC voltages may be controlled independently. As in the embodiment of the present invention, when each of the first PFC circuit 121a, the second PFC circuit 121b, and the third PFC circuit 121c is a single-phase PFC circuit and receives each phase of the three-phase power supply and the neutral point n as inputs, each phase of the three-phase power supply may be controlled independently, and since it is easy to generate an induced voltage in the reception coil unit even when a magnitude of the current applied to the transmission coil unit is small, the size of the transmission coil unit may be reduced.

Meanwhile, each of the first inverter 122a, the second inverter 122b, and the third inverter 122c may have a fixed duty cycle and include a full-bridge inverter. The first inverter 122a, the second inverter 122b, and the third inverter 122c may output asymmetric first to third AC voltages using the independently controlled first to third DC voltages.

According to an embodiment of the present invention, the control unit 110 controls the first PFC circuit 121a, the second PFC circuit 121b, and the third PFC circuit 121c on the basis of the alignment information between the transmission coil unit 130 and the reception coil unit 230, and the first to third DC voltages output from the first PFC circuit 121a, the second PFC circuit 121b, and the third PFC circuit 121c are input to the first inverter 122a, the second inverter 122b, and the third inverter 122c and output as the first AC voltage Vₐ, the second AC voltage V_{b}, and the third AC voltage V_{c}.

Since the independently controlled first to third DC voltages are input to the first inverter 122a, the second inverter 122b, and the third inverter 122c, as shown in FIG. 15, amplitudes of the first AC voltage Vₐ, the second AC voltage V_{b}, and the third AC voltage V_{c} may all be different, or the amplitude of one of the first AC voltage Vₐ, the second AC voltage V_{b}, and the third AC voltage V_{c} may be different from the amplitudes of the other two. However, since duty ratios of the first inverter 122a, the second inverter 122b, and the third inverter 122c are fixed, duty ratios of the first AC voltage Vₐ, the second AC voltage V_{b}, and the third AC voltage V_{c} may all be the same.

At least one of an amplitude and phase of the first current Iₐ applied to the first transmission coil 131, at least one of an amplitude and phase of the second current I_{b} applied to the second transmission coil 132, and at least one of an amplitude and phase of the third current I_{c} applied to the third transmission coil 133 may be controlled by the first AC voltage Vₐ, the second AC voltage V_{b}, and the third AC voltage V_{c} and, accordingly, the first to third currents Iₐ, I_{b}, and I_{c} may also be generated asymmetrically. That is, as shown in FIG. 16, at least two among the amplitude of the first current Iₐ, the amplitude of the second current I_{b}, and the amplitude of the third current I_{c} may be different from each other, or at least two among a phase difference between the first current Iₐ and the second current I_{b}, a phase difference between the second current I_{b} and the third current I_{c}, and a phase difference between the third current I_{c} and the first current Iₐ may be different from each other. For example, the amplitude of the first current Iₐ, the amplitude of the second current I_{b}, and the amplitude of the third current I_{c} may all be different from each other, or one of the amplitude of the first current Iₐ, the amplitude of the second current I_{b}, and the amplitude of the third current I_{c} may be different from the other two. For example, the phase difference between the first current Iₐ and the second current I_{b}, the phase difference between the second current I_{b} and the third current I_{c}, and the phase difference between the third current I_{c} and the first current Iₐ may all be different from each other, or one of the phase difference between the first current Iₐ and the second current I_{b}, the phase difference between the second current I_{b} and the third current I_{c}, and the phase difference between the third current I_{c} and the first current Iₐ may be different from the other two.

Meanwhile, Referring to FIG. 17, it can be seen that, when the first to third PFC circuits 121a, 121b, and 121c output the independently controlled first to third DC voltages as in the circuit diagram of FIG. 13, the first to third inverters 122a, 122b, and 122c may output the first to third AC voltages Vₐ, V_{b}, and V_{c} through soft switching.

According to an embodiment of the present invention, the current applied to the transmission coil unit 130 of the wireless power transmission device 100 are controlled based on alignment information between the transmission coil unit 130 of the wireless power transmission device 100 and the reception coil unit 230 of the wireless power reception device 200 and, accordingly, the power transfer efficiency between the transmission coil unit 130 and the reception coil unit 230 may be increased.

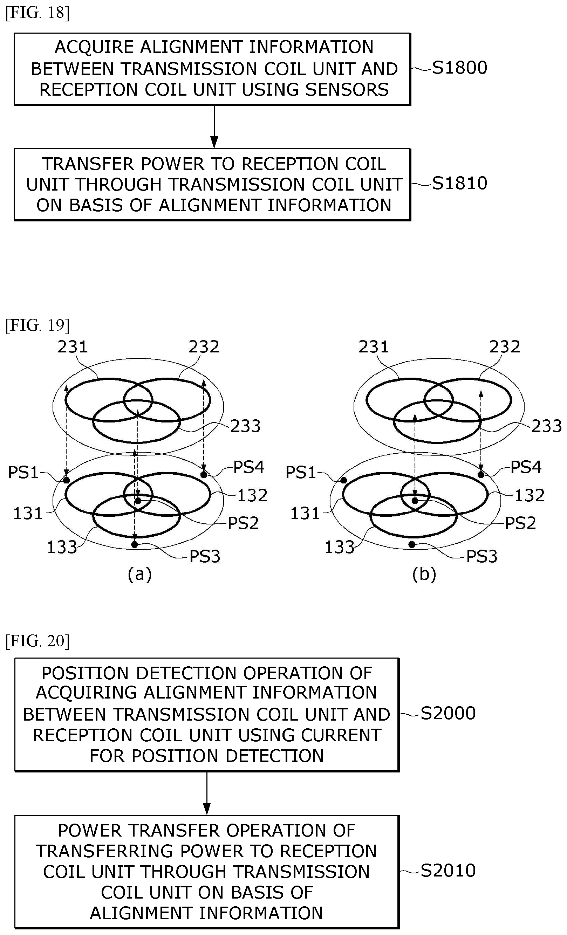

FIG. 18 is a flowchart of a wireless charging method of a wireless charging system according to an embodiment of the present invention, and FIG. 19 shows examples of acquiring alignment information between a transmission coil unit and a reception coil unit according to an embodiment of the present invention.

Referring to FIG. 18, a wireless charging system 20 acquires alignment information between a transmission coil unit 130 of a wireless power transmission device 100 and a reception coil unit 230 of a wireless power reception device 200 using sensors (S1800) and transfers power to the reception coil unit 230 through the transmission coil unit 130 on the basis of the alignment information acquired in operation S1800 (S1810). In operation S1810, a power conversion unit 120 of the wireless power transmission device 100 converts power received from a power supply device 300, and an asymmetric current is applied to first to third transmission coils 131, 132, and 133 included in the transmission coil unit 130. For a detailed description thereof, reference may be made to the content described with reference to FIGS. 1 to 17.

Referring to FIG. 19, an alignment information acquisition unit 140 included in the wireless power transmission device 100 may include sensors, and the alignment information between the transmission coil unit 130 and the reception coil unit 230 may be acquired by the sensors included in the wireless power transmission device 100. For example, the sensors may include a plurality of position sensors PS1, PS2, PS3, and PS4 arranged between the first to third transmission coils 131, 132, and 133 to be spaced apart from each other. The plurality of position sensors PS1, PS2, PS3, and PS4 may be ultrasonic sensors. FIG. 19A shows an example in which the plurality of position sensors PS1, PS2, PS3, and PS4 arranged on the first to third transmission coils 131, 132, and 133 side transmit signals to first to third reception coils 231, 232, and 233 side in a state in which the first to third transmission coils 131, 132, and 133 and the first to third reception coils 231, 232, and 233 are aligned, and FIG. 19B shows an example in which the plurality of position sensors PS1, PS2, PS3, and PS4 arranged on the first to third transmission coils 131, 132, and 133 side transmit signals to the first to third reception coils 231, 232, and 233 side in a state in which the first to third transmission coils 131, 132, and 133 and the first to third reception coils 231, 232, and 233 are unaligned. The alignment information acquisition unit 140 may acquire the alignment information between the transmission coil unit 130 and the reception coil unit 230 on the basis of the signals received by the plurality of position sensors PS1, PS2, PS3, and PS4 in an aligned state. Here, the alignment information between the transmission coil unit 130 and the reception coil unit 230 may be information on a relative position between the transmission coil unit 130 and the reception coil unit 230 and may be the degree of deviation from a precisely aligned state.

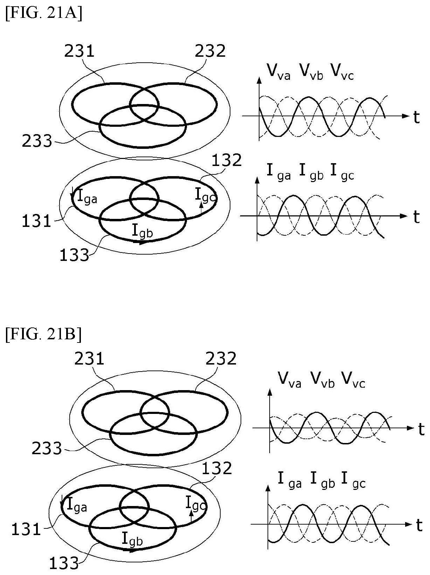

FIG. 20 is a flowchart of a wireless charging method of a wireless charging system according to another embodiment of the present invention, and FIG. 21 shows examples of acquiring alignment information between a transmission coil unit and a reception coil unit according to another embodiment of the present invention.

Referring to FIG. 20, a wireless charging system 20 performs a position detection operation S2000 of acquiring alignment information between a transmission coil unit 130 of a wireless power transmission device 100 and a reception coil unit 230 of a wireless power reception device 200 using currents for position detection, and performs a power transfer operation S2010 of transferring power to the reception coil unit 230 through the transmission coil unit 130 on the basis of the alignment information acquired in operation S2000. In operation S2010, a power conversion unit 120 of the wireless power transmission device 100 converts power received from a power supply device 300, and an asymmetric current is applied to first to third transmission coils 131, 132, and 133 included in the transmission coil unit 130. For a detailed description thereof, reference may be made to the content described with reference to FIGS. 1 to 17.

Referring to FIG. 21, currents for position detection is applied to the first to third transmission coils 131, 132, and 133 of the wireless power transmission device 100 and, accordingly, induced voltages may be generated in first to third reception coils 231, 232, and 233 of the wireless power reception device 200. FIG. 21A shows an example in which currents I_{ga}, I_{gb}, and I_{gc} for position detection are applied to the first to third transmission coils 131, 132, and 133, respectively in a state in which the first to third transmission coils 131, 132, and 133 and the first to third reception coils 231, 232, and 233 are aligned, and FIG. 21B shows an example in which the currents I_{ga}, I_{gb}, and I_{gc} for position detection are applied to the first to third transmission coils 131, 132, and 133, respectively in a state in which the first to third transmission coils 131, 132, and 133 and the first to third reception coils 231, 232, and 233 are unaligned. An alignment information acquisition unit 140 may acquire alignment information between the first to third transmission coils 131, 132, and 133 and the first to third reception coils 231, 232, and 233 on the basis of voltages Vᵥₐ, V_{vb}, and V_{vc} induced in the first to third reception coils 231, 232, and 233 in an aligned state. Here, the alignment information between the first to third transmission coils 131, 132, and 133 and the first to third reception coils 231, 232, and 233 may be information on relative positions between the first to third transmission coils 131, 132, and 133 and the first to third reception coils 231, 232, and 233 and may be the degree of deviation from a precisely aligned state.

Therefore, it is possible to acquire alignment information between the transmission coil unit 130 and the reception coil unit 230 without adding a hardware element such as a position sensor, an auxiliary coil, etc.

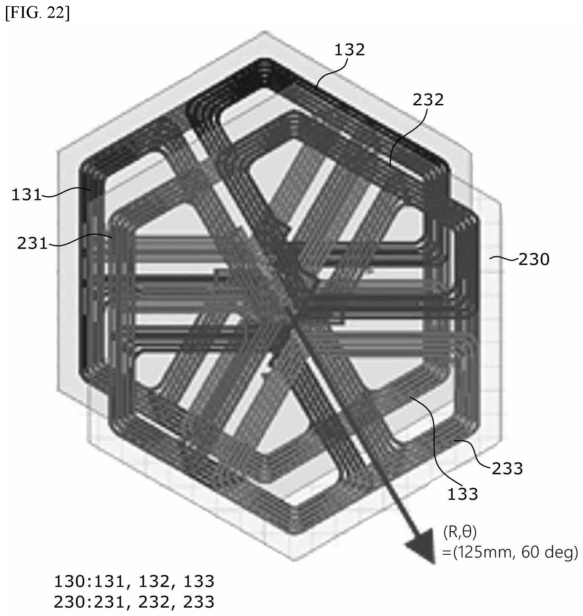

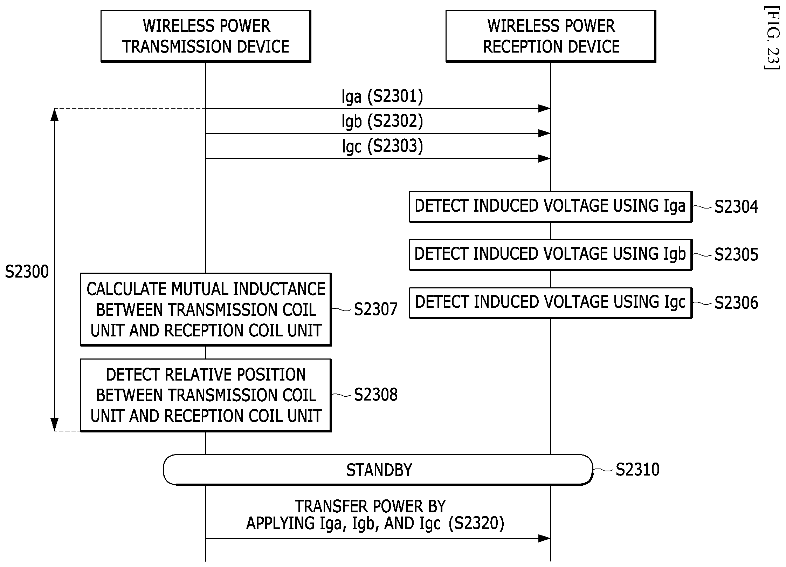

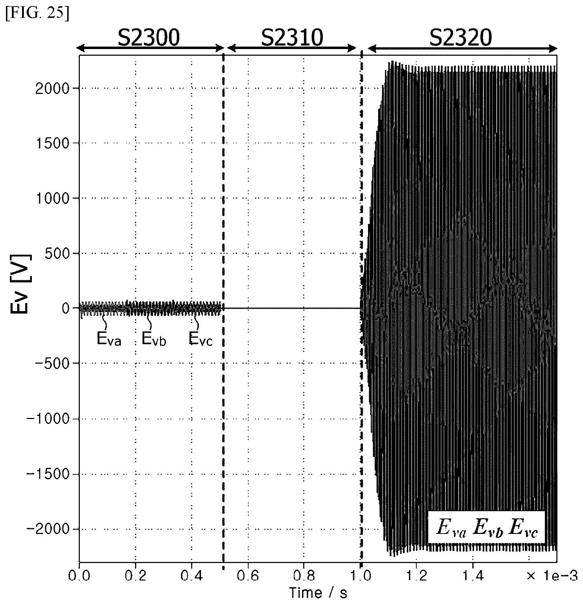

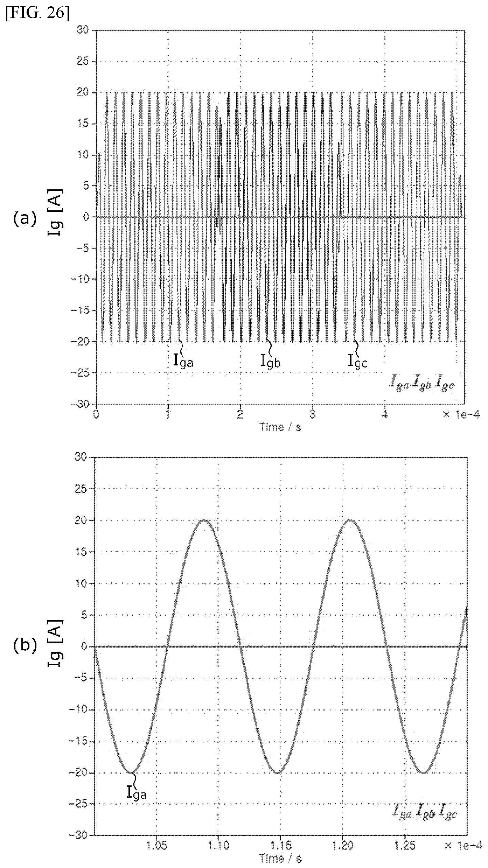

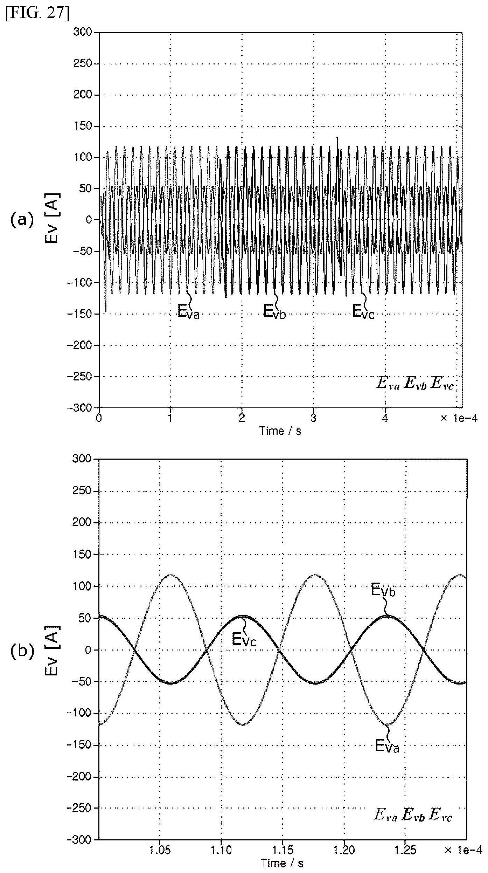

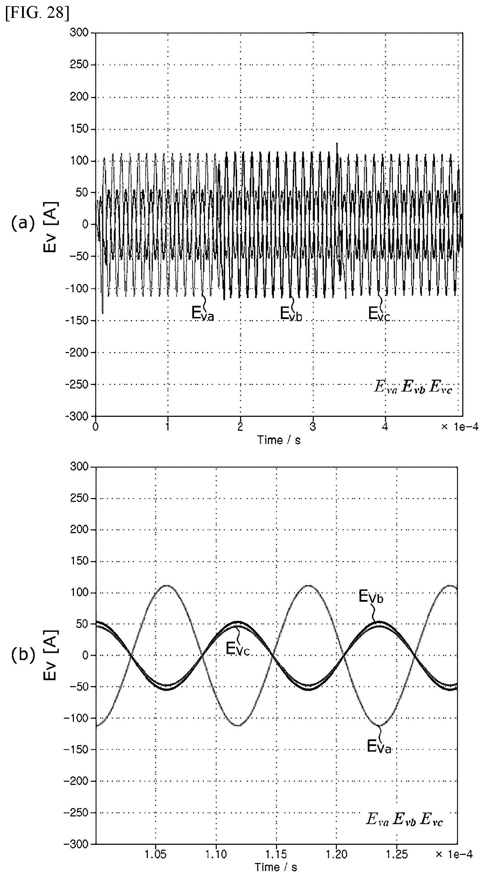

FIG. 22 shows an example of a state in which a transmission coil unit and a reception coil unit included in a wireless charging system according to an embodiment of the present invention are unaligned, FIG. 23 is an embodied flowchart of the wireless charging method described with reference to FIGS. 20 and 21, FIG. 24 shows currents applied to the transmission coil unit in each operation of FIG. 23, and FIG. 25 shows voltages induced in the reception coil unit in each operation of FIG. 23. FIG. 26 shows waveforms of currents applied to a transmission coil unit in a position detection operation of a wireless charging method according to an embodiment of the present invention, FIG. 27 shows waveforms of voltages induced in a reception coil unit when the currents of FIG. 26 are applied to the transmission coil unit in a state in which the transmission coil unit and the reception coil unit are aligned, and FIG. 28 shows waveforms of voltages induced in the reception coil unit when the currents of FIG. 26 are applied to the transmission coil unit in a state in which the transmission coil unit and the reception coil unit are unaligned. FIG. 26B is an enlarged view of a section of FIG. 26A, FIG. 27B is an enlarged view of a section of FIG. 27A, and FIG. 28B is an enlarged view of a section of FIG. 28A. Here, the wireless charging method of FIG. 23 may be implemented, for example, by the circuit diagram of FIG. 13 in this specification.

Referring to FIG. 22, the transmission coil unit 130 includes first to third transmission coils, which are three-phase coils, the reception coil unit 230 includes first to third reception coils, which are three-phase coils, and a state in which the transmission coil unit 130 and the reception coil unit 230 are unaligned may be represented by (R, θ). Here, R may denote a distance between the center of the transmission coil unit and the center of the reception coil unit, and θ may denote an angle of misalignment between the center of the transmission coil unit and the center of the reception coil unit. Here, the distance between the center of the transmission coil unit 130 and the center of the reception coil unit 230 may be a distance between the center of the transmission coil unit 130 and the center of the reception coil unit 230 in a planar direction. Here, the distance in the planar direction may be a distance in the planar direction in which the transmission coil unit 130 is disposed or a distance in the planar direction in which the reception coil unit 230 is disposed. That is, when the center of the transmission coil unit 130 and the center of the reception coil unit 230 overlap in a vertical direction, the distance between the center of the transmission coil unit 130 and the center of the reception coil unit 230 may be expressed as 0. Here, the vertical direction is a direction perpendicular to the planar direction and may be a direction from the transmission coil unit 130 toward the reception coil unit 230. In addition, the angle θ may be an angle formed by the transmission coil unit 130 and the reception coil unit 230 in the planar direction.

Referring to FIGS. 23 to 25, the wireless charging method according to the embodiment of the present invention includes a position detection operation S2300 of acquiring alignment information between the transmission coil unit 130 of the wireless power transmission device 100 and the reception coil unit 230 of the wireless power reception device 200 and a power transfer operation S2320 of transferring power to the reception coil unit 230 through the transmission coil unit 130 on the basis of the alignment information acquired in operation S2300. The wireless charging method according to the embodiment of the present invention may further include a standby operation S2310 between the position detection operation S2300 and the power transfer operation S2320.

In the position detection operation S2300, the wireless power transmission device 100 applies a first current I_{ga} for position detection to a first transmission coil 131 (S2301), applies a second current I_{gb} for position detection to a second transmission coil 132 (S2302), and applies a third current I_{gc} for position detection to a third transmission coil 133 (S2303). As shown in FIGS. 23, 24, and 26, the first to third currents I_{ga}, I_{gb}, and I_{gc} for position detection may be sequentially applied to the first transmission coil 131, the second transmission coil 132, and the third transmission coil 133 so as not to overlap each other. In the example of the circuit diagram of FIG. 13, after the first current I_{ga} for position detection is output from a first PFC circuit 211a and a first inverter 212a, the second current I_{gb} for position detection may be output from a second PFC circuit 211b and a second inverter 212b, and then the third current I_{gc} for position detection may be output from a third PFC circuit 211c and a third inverter 212c. In this case, the first current I_{ga} for position detection, the second current I_{gb} for position detection, and the third current I_{gc} for position detection may have the same amplitude. To this end, each of the first PFC circuit 211a, the second PFC circuit 211b, and the third PFC circuit 211c may output a DC voltage of the same magnitude.

Next, in the position detection operation S2300, the wireless power reception device 200 detects voltages which are induced in a first reception coil 231, a second reception coil 232, and a third reception coil 233 using the first current I_{ga} for position detection applied to the first transmission coil 131 (S2304), detects the voltages which are induced in the first reception coil 231, the second reception coil 232, and the third reception coil 233 using the second current I_{gb} for position detection applied to the second transmission coil 132 (S2305), and detects the voltages which are induced in the first reception coil 231, the second reception coil 232, and the third reception coil 233 using the third current I_{gc} for position detection applied to the third transmission coil 133 (S2306). As shown in FIGS. 23, 25, 27, and 28, when a current I_{g} for position detection is applied to the first to third transmission coils 131, 132, and 133, induced voltages Eᵥ are generated in the first to third reception coils 231, 232, and 233. As shown in FIGS. 26 to 28, when the first current I_{ga} for position detection is applied to the first transmission coil 131, induced voltages Eᵥₐ, E_{vb}, and E_{vc} are generated in the first to third reception coils 231, 232, and 233, respectively. In this case, as shown in FIG. 27, when the first current I_{ga} for position detection is applied to the first transmission coil 131 in a state in which the transmission coil unit 130 and the reception coil unit 230 are aligned, the largest induced voltage Eᵥₐ is generated in the first reception coil 231 facing the first transmission coil 131, and the induced voltages E_{vb} and E_{vc} that overlap each other with the same amplitude and phase are generated in the second reception coil 232 and the third reception coil 233. In contrast, as shown in FIG. 28, when the first current I_{ga} for position detection is applied to the first transmission coil 131 in a state in which the transmission coil unit 130 and the reception coil unit 230 are unaligned, the largest induced voltage Eᵥₐ is generated in the first reception coil 231 that is disposed closest to the first transmission coil 131, and the induced voltages E_{vb} and E_{vc} in a misaligned form with amplitudes and phases that do not exactly overlap are generated in the second reception coil 232 and the third reception coil 233. In the same manner, when the second current I_{gb} for position detection is applied to the second transmission coil 132, the largest induced voltage Eᵥₐ is generated in the second reception coil 232 that is disposed closest to the second transmission coil 132, and the induced voltages Eᵥₐ and E_{vc} in a misaligned form with amplitudes and phases that do not exactly overlap are generated in the first reception coil 231 and the third reception coil 233. When the third current I_{gc} for position detection is applied to the third transmission coil 133, the largest induced voltage Eᵥₐ is generated in the third reception coil 233 that is disposed closest to the third transmission coil 133, and the induced voltages Eᵥₐ and E_{vb} in a misaligned form with amplitudes and phases that do not exactly overlap are generated in the first reception coil 231 and the second reception coil 232.

Next, in the position detection operation S2300, the wireless power transmission device 100 calculates a mutual inductance between the transmission coil unit 130 and the reception coil unit 230 (S2307). Here, the mutual inductance between the transmission coil unit 130 and the reception coil unit 230 may be calculated based on the voltages which are induced in the first to third reception coils 231, 232, and 233 when the current for position detection is applied to the first transmission coil 131, the voltages which are induced in the first to third reception coils 231, 232, and 233 when the current for position detection is applied to the second transmission coil 132, and the voltages which are induced in the first to third reception coils 231, 232, and 233 when the current for position detection is applied to the third transmission coil 133. To this end, the wireless power transmission device 100 may receive the induced voltages, which are detected by the wireless power reception device 200 in operations S2304, S2305, and S2306, from the wireless power reception device 200, receive the induced voltages through the power supply device 300, or receive the induced voltages through an upper-level management server (not shown).

For example, the mutual inductance between the transmission coil unit 130 and the reception coil unit 230 may be calculated as follows.

A current I_{g} for position detection applied to the first to third transmission coils 131, 132, and 133 may be expressed as follows.$I = \left[\begin{matrix}{I}_{ga} \\ {I}_{gb} \\ {I}_{gc}\end{matrix}\right]$

A voltage Eᵥ induced in the first to third reception coils 231, 232, and 233 may be expressed as follows.${E}_{ν} = \left[\begin{matrix}{E}_{νa} \\ {E}_{νb} \\ {E}_{νc}\end{matrix}\right]$

A relational expression between the current I_{g} for position detection, the induced voltage Eᵥ, and a mutual inductance M_{vg} may be expressed as follows.${E}_{v} = {M}_{vg} {I}_{g}$

A voltage Eᵥ₁ induced in the first to third reception coils when the current I_{ga} for position detection is applied to the first transmission coil 131 may be expressed as follows.${E}_{ν 1} = \left[\begin{matrix}{M}_{νaga} {I}_{ga} \\ {M}_{νbga} {I}_{ga} \\ {M}_{νcga} {I}_{ga}\end{matrix}\right]$

A voltage Eᵥ₂ induced in the first to third reception coils when the current I_{gb} for position detection is applied to the second transmission coil 132 may be expressed as follows.${E}_{ν 2} = \left[\begin{matrix}{M}_{νagb} {I}_{gb} \\ {M}_{νbgb} {I}_{gb} \\ {M}_{νcgb} {I}_{gb}\end{matrix}\right]$

A voltage Eᵥ₃ induced in the first to third reception coils when the current I_{gc} for position detection is applied to the third transmission coil 133 may be expressed as follows.${E}_{ν 3} = \left[\begin{matrix}{M}_{νagc} {I}_{gc} \\ {M}_{νbgc} {I}_{gc} \\ {M}_{νcgc} {I}_{gc}\end{matrix}\right]$

Accordingly, mutual inductances between the first to third transmission coils 131, 132, and 133 and the first to third reception coils 231, 232, and 233 may be expressed in the form of a 3*3 matrix as follows. ${M}_{νg} = \left[\begin{matrix}{M}_{νaga} {M}_{νagb} {M}_{νagc} \\ {M}_{νbga} {M}_{νbgb} {M}_{νbgc} \\ {M}_{νcga} {M}_{νcgb} {M}_{νcgc}\end{matrix}\right]$

Next, in the position detection operation S2300, the wireless power transmission device 100 detects a relative position between the transmission coil unit 130 and the reception coil unit 230 on the basis of the mutual inductance (S2308). The relative position between the transmission coil unit 130 and the reception coil unit 230 may be represented by (R, θ) as described above with reference to FIG. 22. As (R, θ) converges to (0, 0), the transmission coil unit 130 and the reception coil unit 230 are in a precisely aligned state, and as (R, θ) moves away from (0, 0), the transmission coil unit 130 and the reception coil unit 230 move away from the precisely aligned state and become an unaligned state.

In the above description, the wireless power transmission device 100 is described as calculating the mutual inductance between the transmission coil unit 130 and the reception coil unit 230 and detecting the relative position between the transmission coil unit 130 and the reception coil unit 230, but the present invention is not limited thereto. The mutual inductance and relative position between the transmission coil unit 130 and the reception coil unit 230 may be detected by the power supply device 300 or an upper-level management server (not shown).

Thereafter, the wireless charging system performs the power transfer operation S2320 after performing the standby operation S2310. For a detailed description of the power transfer operation S2320, reference may be made to the content described with reference to FIGS. 1 to 17. That is, as shown in FIGS. 23 to 25, during the power transfer operation S2320, a first current Iₐ is applied to the first transmission coil 131, a second current I_{b} is applied to the second transmission coil 132, and a third current I_{c} is applied to the third transmission coil 133. In this case, the first current Iₐ, the second current I_{b}, and the third current I_{c} may be simultaneously applied to the first transmission coil 131, the second transmission coil 132, and the third transmission coil 133. In the power transfer operation S2320, the first current Iₐ, the second current I_{b}, and the third current I_{c} which are applied to the first transmission coil 131, the second transmission coil 132, and the third transmission coil 133 may be based on the alignment information acquired in the position detection operation S2300. That is, as a result of the position detection operation S2300, when it is determined that the transmission coil unit 130 and the reception coil unit 230 are unaligned, asymmetry may be imparted to the first current Iₐ, the second current I_{b}, and the third current I_{c}.

That is, as described with reference to FIGS. 13 to 17, a control unit 110 may control a first PFC circuit 121a, a second PFC circuit 121b, and a third PFC circuit 121c on the basis of the alignment information between the transmission coil unit 130 and the reception coil unit 230, and first to third DC voltages output from the first PFC circuit 121a, the second PFC circuit 121b, and the third PFC circuit 121c may be input to a first inverter 122a, a second inverter 122b, and a third inverter 122c to be output as a first AC voltage Vₐ, a second AC voltage V_{b}, and a third AC voltage V_{c}.

Since independently controlled DC voltages are input to the first inverter 122a, the second inverter 122b, and the third inverter 122c, as shown in FIG. 15, amplitudes of the first AC voltage Vₐ, the second AC voltage V_{b}, and the third AC voltage V_{c} may all be different from, or the amplitude of one of the first AC voltage Vₐ, the second AC voltage V_{b}, and the third AC voltage V_{c} may be different from the amplitudes of the other two. However, since duty ratios of the first inverter 122a, the second inverter 122b, and the third inverter 122c are fixed, duty ratios of the first AC voltage Vₐ, the second AC voltage V_{b}, and the third AC voltage V_{c} may all be the same. At least one of an amplitude and phase of the first current Iₐ applied to the first transmission coil 131, at least one of an amplitude and phase of the second current I_{b} applied to the second transmission coil 132, and at least one of an amplitude and phase of the third current I_{c} applied to the third transmission coil 133 may be controlled by the first AC voltage Vₐ, the second AC voltage V_{b}, and the third AC voltage V_{c} and, accordingly, the first to third currents Iₐ, I_{b}, and I_{c} may also be generated asymmetrically. That is, as shown in FIG. 16, at least two among the amplitude of the first current Iₐ, the amplitude of the second current I_{b}, and the amplitude of the third current I_{c} may be different from each other, or at least two among a phase difference between the first current Iₐ and the second current I_{b}, a phase difference between the second current I_{b} and the third current I_{c}, and a phase difference between the third current I_{c} and the first current Iₐ may be different from each other. For example, the amplitude of the first current Iₐ, the amplitude of the second current I_{b}, and the amplitude of the third current I_{c} may all be different from each other, or one of the amplitude of the first current Iₐ, the amplitude of the second current I_{b}, and the amplitude of the third current I_{c} may be different from the other two. For example, the phase difference between the first current Iₐ and the second current I_{b}, the phase difference between the second current I_{b} and the third current I_{c}, and the phase difference between the third current I_{c} and the first current Iₐ may all be different from each other, or one of the phase difference between the first current Iₐ and the second current I_{b}, the phase difference between the second current I_{b} and the third current I_{c}, and the phase difference between the third current I_{c} and the first current Iₐ may be different from the other two.

To this end, the control unit 110 included in the wireless power transmission device 100 according to the embodiment of the present invention may control a PFC circuit unit 121 differently in the position detection operation S2300 from in the power transfer operation S2320. That is, in the position detection operation S2300, the control unit 110 may control the first to third PFC circuits 121a, 121b, and 121c so that DC voltages corresponding to the currents I_{ga}, I_{gb}, and I_{gc} for position detection are output, and in the power transfer operation S2320, the control unit 110 may control the first to third PFC circuits 121a, 121b, and 121c so that DC voltages corresponding to the first to third currents Iₐ, I_{b}, and I_{c} based on the alignment information are output.

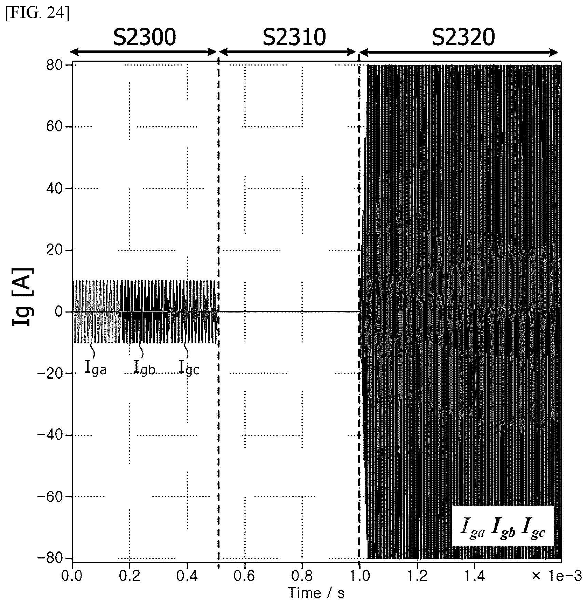

According to an embodiment of the present invention, as shown in FIG. 24, amplitudes of the currents I_{ga}, I_{gb}, and I_{gc} for position detection applied to the first to third transmission coils 131, 132, and 133 in the position detection operation S2300 may be smaller than amplitudes of the first to third currents Iₐ, I_{b}, and I_{c} applied to the first to third transmission coils 131, 132, and 133 in the power transfer operation S2320. Therefore, the alignment information between the transmission coil unit 130 and the reception coil unit 230 may be acquired using minimal power in the position detection operation S2300, thereby reducing unnecessary power consumption.

While exemplary embodiments of the present invention and their advantages have been described above in detail, it should be understood by those skilled in the art that various changes, substitutions, and alterations may be made herein without departing from the scope of the invention as defined by the following claims.

## Claims

1. A wireless power transmission device comprising:
a control unit,
a power conversion unit configured to convert power received from a power supply device, and
a transmission coil unit to which a current output from the power conversion unit is applied,
wherein the transmission coil unit includes a first transmission coil, a second transmission coil, and a third transmission coil,
wherein the power conversion unit includes a power factor correction circuit unit that outputs a DC voltage from the power received from the power supply device, and an inverter unit that outputs an AC voltage from the DC voltage received from the power factor correction circuit unit,
wherein the inverter unit outputs a first AC voltage, a second AC voltage, and a third AC voltage,
wherein at least two among an amplitude of the first AC voltage, an amplitude of the second AC voltage, and an amplitude of the third AC voltage are different from each other, and
wherein a duty ratio of the first AC voltage, a duty ratio of the second AC voltage, and a duty ratio of the third AC voltage are identical to each other.

2. The wireless power transmission device of claim 1, wherein:
the power factor correction circuit unit includes a first power factor correction circuit, a second power factor correction circuit, and a third power factor correction circuit,
the inverter unit includes a first inverter to which a first DC voltage output from the first power factor correction circuit is input, a second inverter to which a second DC voltage output from the second power factor correction circuit is input, and a third inverter to which a third DC voltage output from the third power factor correction circuit is input,
the first AC voltage is output from the first inverter,
the second AC voltage is output from the second inverter, and
the third AC voltage is output from the third inverter.

3. The wireless power transmission device of claim 2, wherein the first power factor correction circuit, the second power factor correction circuit, and the third power factor correction circuit are controlled by the control unit on the basis of alignment information between the transmission coil unit and a reception coil unit included in a wireless power reception device.

4. The wireless power transmission device of claim 2, wherein:
an input of the first power factor correction circuit is first phase power received from the power supply device,
an input of the second power factor correction circuit is second phase power received from the power supply device,
an input of the third power factor correction circuit is third phase power received from the power supply device, and
at least one of the first power factor correction circuit, the second power factor correction circuit, and the third power factor correction circuit is connected to a neutral point.

5. The wireless power transmission device of claim 2, wherein:
a current output from the power conversion unit includes a first current applied to the first transmission coil, a second current applied to the second transmission coil, and a third current applied to the third transmission coil, and
at least one of an amplitude and phase of the first current, at least one of an amplitude and phase of the second current, and at least one of an amplitude and phase of the third current are controlled by the first AC voltage, the second AC voltage, and the third AC voltage.

6. The wireless power transmission device of claim 5, wherein:
at least two among the amplitude of the first current, the amplitude of the second current, and the amplitude of the third current are different from each other, or
at least two among a phase difference between the first current and the second current, a phase difference between the second current and the third current, and a phase difference between the third current and the first current are different from each other.

7. The wireless power transmission device of claim 2, wherein each of the first inverter, the second inverter, and the third inverter is a full-bridge inverter.

8. The wireless power transmission device of claim 1, wherein the power conversion unit further includes an impedance matching unit disposed between the inverter unit and the transmission coil unit.

9. A wireless power transmission device comprising:
a control unit,
a power conversion unit configured to convert power received from a power supply device, and
a transmission coil unit to which a current output from the power conversion unit is applied,
wherein the transmission coil unit includes a first transmission coil, a second transmission coil, and a third transmission coil,
wherein the power conversion unit includes a power factor correction circuit unit that outputs a DC voltage from the power received from the power supply device, and an inverter unit that outputs an AC voltage from the DC voltage received from the power factor correction circuit unit,
wherein the power factor correction circuit unit includes a first power factor correction circuit that outputs a first DC voltage, a second power factor correction circuit that outputs a second DC voltage, and a third power factor correction circuit that outputs a third DC voltage,
wherein the inverter unit includes a first inverter that outputs a first AC voltage from the first DC voltage, a second inverter that outputs a second AC voltage from the second DC voltage, and a third inverter that outputs a third AC voltage from the third DC voltage, and
wherein the first power factor correction circuit, the second power factor correction circuit, and the third power factor correction circuit are controlled by the control unit on the basis of alignment information between the transmission coil unit and a reception coil unit included in a wireless power reception device.

10. A wireless power transmission method of a wireless power transmission device, comprising:
a power conversion operation of converting power received from a power supply device; and
a current application operation of applying a current output in the power conversion operation to a first transmission coil, a second transmission coil, and a third transmission coil,
wherein the power conversion operation includes an operation of outputting a first DC voltage, a second DC voltage, and a third DC voltage from the power received from the power supply device, and an operation of outputting a first AC voltage, a second AC voltage, and a third AC voltage from the first DC voltage, the second DC voltage, and the third DC voltage, and
in the power conversion operation, at least two among an amplitude of the first AC voltage, an amplitude of the second AC voltage, and an amplitude of the third AC voltage are controlled to be different from each other, and a duty ratio of the first AC voltage, a duty ratio of the second AC voltage, and a duty ratio of the third AC voltage are controlled to be identical to each other.
